(19)

Europäisches
Patentamt
European
Patent Office
Office européen
des brevets

(11) **EP 2 602 642 A1**

(12) **EUROPEAN PATENT APPLICATION**
published in accordance with Art. 153(4) EPC

(43) Date of publication:
**12.06.2013 Bulletin 2013/24**

(21) Application number: **11814532.5**

(22) Date of filing: **28.07.2011**

(51) Int Cl.:
**G01S 19/34** *(2010.01)*    **G01S 19/30** *(2010.01)*
**G01S 19/37** *(2010.01)*

(86) International application number:
**PCT/JP2011/067207**

(87) International publication number:
**WO 2012/017905 (09.02.2012 Gazette 2012/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.08.2010 JP 2010175639**

(71) Applicant: **Sony Corporation
Tokyo 108-0075 (JP)**

(72) Inventors:
• **TANAKA, Katsuyuki
Tokyo 108-0075 (JP)**
• **AWATA, Hideki
Tokyo 108-0075 (JP)**
• **TAKAHASHI, Hideki
Tokyo 108-0075 (JP)**

(74) Representative: **Körber, Martin Hans
Mitscherlich & Partner
Sonnenstraße 33
80331 München (DE)**

(54) **RECEIVING DEVICE, RECEIVING METHOD AND MOBILE TERMINAL**

(57)     Provided is a receiving device, including a receiving unit that receives a signal from a satellite in a GPS, a frequency converting unit that converts a frequency of a reception signal received by the receiving unit into a predetermined IF, a synchronization acquiring unit that performs synchronization acquisition for detecting a phase of a spread code in the IF signal and detects a carrier frequency in the IF signal, a synchronization holding unit that assigns and sets the phase of the spread code and the carrier frequency detected by the synchronization acquiring unit to a plurality of channels, holds synchronization of the spread code and a carrier using the set phase of the spread code and the carrier frequency, and demodulates a message included in the IF signal, and a control unit that executes operation control including a positioning calculation using the message demodulated by the synchronization holding unit.

FIG. 1

**Description**

Technical Field

The present disclosure relates to a receiving device, a receiving method, and a mobile terminal.

Background Art

In recent years, various electronic devices such as car navigation devices and mobile telephones have come equipped with a positioning function using the Global Positioning System (GPS). Typically, when the GPS is used in an electronic device, a GPS module receives signals from four or more GPS satellites, measures the position of the device based on the reception signals, and notifies a user of a measurement result through a screen of a display device or the like. More specifically, the GPS module demodulates the reception signals, acquires trajectory data of each GPS satellite, and derives a three-dimensional (3D) position of the device based on the trajectory data, time information, and a delay time of the reception signal by a simultaneous equation. Using four or more GPS satellites as a reception target, influence of an error between an internal time of a module and a time of a satellite can be reduced.

Here, a signal (an L1 band and a C/A code) transmitted from the GPS satellite is a signal in which Binary Phase Shift Keying (BPSK) modulation is performed on a spread spectrum signal, which has undergone spread spectrum modulation on data of 50 bps by a gold code of a code length 1023 and a chip rate of 1.023 MHz, using a carrier of 1575.42 MHz. Thus, in order for the GPS module to receive the signal from the GPS satellite, it is necessary to acquire synchronization of a spread code, a carrier, and data.

Generally, a GPS module mounted in an electronic device performs frequency conversion from a carrier frequency of a reception signal to an intermediate frequency (IF) of several MHz or less, and then performs the synchronization process. For example, a typical IF is 4.092 MHz, 1.023 MHz, 0 Hz, or the like. Typically, a signal level of the reception signal is smaller than a signal level of thermal noise, and a signal to noise (S/N) ratio is smaller than 0 dB, but the signal can be demodulated by a processing gain of a spread spectrum scheme. In the case of a GPS signal, for example, a processing gain on a data length of 1 bit is 10 Log (1.023 MHz/50)≈43 dB.

In the past, GPS receivers were mainly used in car navigations, but GPS receivers have recently been mounted in mobile telephones, digital still cameras (hereinafter, "DSC"), and the like, and the market for the GPS receivers is growing. In terms of performance, sensitivity has been improved, and thus GPS receivers having receiving sensitivity of -150 to -160 dBm is being proliferated. This is possible since integration of an integrated circuit (IC) increases due to miniaturization of a semiconductor process and thus a large-scale circuit can be manufactured at a low cost, and power consumption has been reduced.

In the past, GPS receivers employed for car navigation were basically used for continuous positioning (typically, once per second), and since electric power is supplied from a large capacity battery of a vehicle, power consumption at the time of operation is hardly problematic. Meanwhile, recent simple navigation systems (personal navigation devices (PND)), mobile telephones, DSCs, and other mobile devices are supplied with electric power from a small battery, and except for the PND, continuous positioning is not necessarily required. In mobile devices, a duration time of a battery is a very important element, and it is desirable to avoid a situation in which the mounted GPS receiver is operated in the same manner as in the past, thus extremely reducing the duration time of the battery and affecting an original function of a mobile device. As described above, an attempt to reduce power consumption of the GPS receiver has been recently made, but power consumption at the time of continuous operation is not sufficient for a mobile device, and there are many cases in which power consumption is reduced by an intermittent operation. Through an intermittent operation, the frequency of positioning is reduced, but when electric power of a whole circuit or most excluding only some parts of a circuit is reduced when positioning is not performed, an effect by which average power is reliably lowered can be expected.

The intermittent operation in the GPS receiver causes a sleep state in which only requisite minimal circuits are operated when positioning is not performed and reduces a time average of electric power, thereby reducing power consumption. The requisite minimal circuits operated in the sleep state include a real-time clock (hereinafter, "RTC"; generally a frequency of 32.768 kHz) with a low frequency and a backup memory that holds the trajectory and time information of the satellite and the like. In order to perform the intermittent operation, it is necessary to re-establish synchronization of a reception signal from each satellite in a short time after the recovery from the sleep state.

A simplest method of reestablishing synchronization of a reception signal is to perform the same initial start as when the typical GPS receiver is powered on after recovery. The initial start of the typical GPS receiver is classified into three kinds, i.e., a cold start, a warm start, and a hot start, depending on whether or not an ephemeris and an almanac, which are trajectory information of a satellite, can be used. The ephemeris is trajectory information that is individually broadcast from a satellite, which is high in accuracy since it is used for a positioning calculation, but short in period of validity. The almanac is rough trajectory information of all satellites commonly broadcast from all satellites, which is short in period of validity and is used to specify a receivable satellite. The cold start is an initial start when it is difficult to use either type of trajectory information, the warm start is an initial start when only the almanac can be used, and the hot start is an initial start when it is possible to use both types of trajectory information. In the cold start and the warm start, positioning typically takes about 30 seconds, but in the hot start, positioning is performed as short a time as several seconds, and under optimal conditions can be performed in one second or less.

In the intermittent operation method of performing the typical initial start of the typical GPS receiver for re-establishment of synchronization, generally, after initial positioning is established by the cold or warm start at the initial stage, the intermittent operation is performed, and the hot start that causes positioning to be performed in a short time is performed. In the case of this method, a synchronization acquiring unit that acquires synchronization on the reception signal of the satellite operates in the GPS receiver. Since the synchronization acquiring unit has a large processing load, there are many cases in which power consumption by a synchronization holding unit that holds synchronization is very high, and thus there occurs a problem when peak power is specified by a battery rather than average power.

In order to lower the peak power, there is a method of reestablishing synchronization only by the synchronization holding unit without using the synchronization acquiring unit. To this end, a synchronization holding circuit needs to be activated at the accuracy within one chip (1/1.023 microseconds) of a diffusion code after the recovery from the sleep state using a method of keeping time information of high accuracy even in the sleep time period. In case of the accuracy within the diffusion code of one chip, a delay lock loop (DLL) that performs synchronization of a diffusion code can instantly perform synchronization. Generally, the synchronization holding unit includes a plurality of synchronization holding circuits that hold synchronization, and can receive signals from a plurality of satellites at the same time and hold synchronization on each satellite, but due to a relation between the accuracy and stability of a oscillating frequency of an oscillator that measures a time, the longer the sleep time period is, the more difficult it is to keep time information of high accuracy.

In order to keep time information of high accuracy in the sleep time period, there is a method in which a result of measuring a frequency (several tens of ppm) of an RTC having low accuracy using a counter by a GPS reception oscillator having high accuracy (a temperature-compensated TCXO is generally used, and an example of a case for a GPS is 0.5 ppm) before the sleep state is stored, and after the recovery from the sleep state, error correction is performed using the measurement result before the sleep state at an elapsed time by the RTC (Patent Literature 1). Using this method, in the sleep state, only the RTC operates, the GPS reception oscillator stops, and after the recovery from the sleep state, synchronization can be reestablished without using the synchronization acquiring unit, so that power consumption can be expected to be considerably reduced.

Citation List

Patent Literature

Patent Literature 1: Japanese Patent No. 4164662

Summary of Invention

Technical Problem

However, whether or not synchronization can be instantly reestablished with only the synchronization holding unit is decided depending on the accuracy of measurement, a sleep time length, and stability of the RTC and the GPS reception oscillator in the sleep state in addition to the moving velocity of the GPS receiver itself. Particularly, due to stability of the RTC which is not temperature-compensated as a dominant factor, in practical use, the measurement result momentarily changes, and a deviation occurs in the error correction after the recovery from the sleep state, and thus it is difficult to have a long sleep time. A predetermined time is necessary for a positioning calculation after the recovery from the sleep state, and thus when it is difficult to increase an ON-OFF ratio of an intermittent operation, there is no merit to the method of performing initial positioning by the hot start in connection with average power. Further, a variation in stability of the RTC causes it to be difficult to guarantee an operation of a product which is mass-produced.

A demand for the GPS receiver differs according to properties of a mounted product, but an intermediate demand between continuous positioning of car navigation and single positioning typical for a DSC, that is, a demand to lower positioning frequency such as logging of position data and quasi-continuously perform positioning at low power is free from a restriction of stability of the RTC, and an intermittent operation of high stability is expected.

In this regard, the present disclosure is made in light of the foregoing, and the present disclosure is directed to provide a receiving device, a receiving method, and a mobile terminal, which are novel and improved and capable of reducing average power and peak power by operating only a timer function during a sleep time period, performing a predictive calculation on a starting point of a diffusion code cycle for each satellite based on a measurement result of the timer function when recovered from the sleep state, and acquiring synchronization again.

Solution to Problem

According to an embodiment of the present disclosure, there is provided a receiving device, including a receiving unit that receives a signal from a satellite in the Global Positioning System (GPS), a frequency converting unit that converts a frequency of a reception signal received by the receiving unit into a predetermined intermediate frequency (IF), a synchronization acquiring unit that performs synchronization acquisition for detecting a phase of a spread code in the IF signal converted by the frequency converting unit and detects a carrier frequency in the IF signal, a synchronization holding unit that assigns and sets the phase of the spread code detected by the synchronization acquiring unit and the carrier frequency detected by the synchronization acquiring unit to a plurality of channels that are independently provided for each satellite in order to correspond to a plurality of the satellites, holds synchronization of the spread code and a carrier using the set phase of the spread code and the carrier frequency, and demodulates a message included in the IF signal, and a control unit that executes operation control including a positioning calculation using the message demodulated by the synchronization holding unit. The synchronization holding unit may include a diffusion code generating unit that generates a diffusion code in synchronization with the spread code, and the synchronization holding unit refers to a counter that operates with a clock using a temperature-compensated oscillator that oscillates at a predetermined frequency as an oscillation source, and during a sleep time period in which a positioning operation is not performed, only the counter may operate and the synchronization holding unit may stop generating a diffusion code, and when the sleep time period ends, the control unit may perform a predictive calculation on a starting point of a diffusion code cycle from an elapsed time measured by the counter for each satellite, and the diffusion code generating unit assigned for each satellite may be started according to the predicted starting point.

The receiving device may further include a real-time clock that is lower in power consumption than the clock, and a memory that holds a value even in the sleep time period. The control unit may store a value of the counter in the real-time clock before the sleep time period starts in the memory with reference to two or more points, operates the real-time clock instead of the counter when the sleep time period starts, converts an elapsed time of the real-time clock into an elapsed time of the counter using the value of the counter stored in the memory when the sleep time period ends, performs a predictive calculation on the starting point of the diffusion code cycle using information of the converted elapsed time for each satellite, and operates the diffusion code generating unit assigned to each satellite according to the predicted starting point.

The control unit may store one or more ratios of a value of the counter during given two points in time and an elapsed time of the real-time clock during the given two points in time the memory, predict a ratio of an elapsed time of the counter and an elapsed time of the real-time clock using information of the one or more ratios of the elapsed times stored in the memory when the sleep time period ends, and convert an elapsed time of the real-time clock into an elapsed time of the counter using the prediction result.

When the ratio of the elapsed times of the real-time clock is equal to or less than a predetermined value, the real-time clock may be operated instead of the counter during the sleep time period, and when the ratio of the elapsed times of the real-time clock is over the predetermined value, only the counter is operated during the sleep time period.

The control unit may correct a value of the numerically controlled oscillator at a point in time at which the sleep time period ends in consideration of an amount of change in a Doppler shift of a satellite in the sleep time period.

The diffusion code generating unit may include a numerically controlled oscillator and a spread code generator that receives an output signal of the numerically controlled oscillator and generates a spread code.

Operations of the receiving unit, the frequency converting unit, the synchronization acquiring unit, and the control unit may be stopped in the sleep time period.

Further, according to another embodiment of the present disclosure, there is provided a receiving method, including receiving a signal from a satellite in the Global Positioning System (GPS), converting a frequency of the received reception signal into a predetermined intermediate frequency (IF), performing synchronization acquisition for detecting a phase of a spread code in the converted IF signal, and detecting a carrier frequency in the IF signal, generating a diffusion code in synchronization with the spread code, assigning and setting the phase of the spread code detected by the synchronization acquisition and the carrier frequency detected by the synchronization acquisition to a plurality of channels that are independently provided for each satellite in order to correspond to a plurality of the satellites using a synchronization holding unit that refers to a counter that operates with a clock using a temperature-compensated oscillator that oscillates at a predetermined frequency as an oscillation source, holding synchronization of the spread code and a carrier using the set phase of the spread code and the carrier frequency, and demodulating a message included in the IF signal, executing operation control including a positioning calculation using the demodulated message, and during a sleep time period in which a positioning operation is not performed, operating only the counter and stopping generating a diffusion code, and when the sleep time period ends, performing a predictive calculation on a starting point of a diffusion code cycle from an elapsed time measured by the counter for each satellite, and restarting generating a diffusion code for each satellite according to the predicted starting point.

Further, according to another embodiment of the present disclosure, there is provided a computer program for causing a computer to execute receiving a signal from a satellite in the Global Positioning System (GPS), converting a frequency of the received reception signal into a predetermined intermediate frequency (IF), performing synchronization acquisition for detecting a phase of a spread code in the converted IF signal, and detecting a carrier frequency in the IF signal, generating a diffusion code in synchronization with the spread code, assigning and setting the phase of the spread code detected by the synchronization acquisition and the carrier frequency detected by the synchronization acquisition to a plurality of channels that are independently provided for each satellite in order to correspond to a plurality of the satellites using a synchronization holding unit that refers to a counter that operates with a clock using a temperature-compensated oscillator that oscillates at a predetermined frequency as an oscillation source, holding synchronization of the spread code and a carrier using the set phase of the spread code and the carrier frequency, and demodulating a message included in the IF signal, executing operation control including a positioning calculation using the demodulated message, and during a sleep time period in which a positioning operation is not performed, operating only the counter and stopping generating a diffusion code, and when the sleep time period ends, performing a predictive calculation on a starting point of a diffusion code cycle from an elapsed time measured by the counter for each satellite, and restarting generating a diffusion code for each satellite according to the predicted starting point.

Further, according to another embodiment of the present disclosure, there is provided a mobile terminal that exchanges a command and information with the receiving device.

Advantageous Effects of Invention

As described above, according to the present disclosure, it is possible to provide a receiving device, a receiving method, and a mobile terminal, which are novel and improved and capable of reducing average power and peak power by operating only a timer function during a sleep time period, performing a predictive calculation on a starting point of a diffusion code cycle for each satellite based on a measurement result of the timer function when recovered from the sleep state, and acquiring synchronization again.

Brief Description of Drawings

[Fig. 1] Fig. 1 is a block diagram illustrating a configuration of a GPS module according to the present disclosure.
[Fig. 2] Fig. 2 is a block diagram illustrating an example of a detailed configuration of a synchronization acquiring unit illustrated in Fig. 1.
[Fig. 3] Fig. 3 is a block diagram illustrating another example of a detailed configuration of the synchronization acquiring unit illustrated in Fig. 1.
[Fig. 4] Fig. 4 is an explanatory diagram illustrating an example of a peak of a correlation signal output from a digital matched filter.
[Fig. 5] Fig. 5 is an explanatory diagram illustrating a data structure of an ephemeris and an almanac which are trajectory information of a satellite.
[Fig. 6] Fig. 6 is an explanatory diagram illustrating a concept of an intermittent operation by a hot start.
[Fig. 7] Fig. 7 is an explanatory diagram illustrating a configuration of a synchronization holding unit 50 included in the GPS module 10 illustrated in Fig. 1.
[Fig. 8] Fig. 8 is an explanatory diagram illustrating a configuration of a channel circuit 100 illustrated in Fig. 7.
[Fig. 9] Fig. 9 is an explanatory diagram illustrating a state in which synchronization of a spread code in a reception signal and a phase of a diffusion code generator is held by control of a DLL.
[Fig. 10] Fig. 10 is an explanatory diagram illustrating a relation between a reception signal and an elapsed time.
[Fig. 11] Fig. 11 is an explanatory diagram illustrating an example in which a starting point of a diffusion code generator is appropriately set for each satellite.
[Fig. 12] Fig. 12 is an explanatory diagram illustrating an example of a change in a Doppler shift of a satellite through a graph.
[Fig. 13] Fig. 13 is a flowchart illustrating an operation of a GPS module 10.
[Fig. 14] Fig. 14 is an explanatory diagram illustrating an example of a CPU 60 reading a value of a counter 90 when a time of an RTC 64 changes.
[Fig. 15] Fig. 15 is an explanatory diagram illustrating an example of a change in a frequency of an RTC 64 that changes over time.
[Fig. 16] Fig. 16 is an explanatory diagram illustrating a configuration of a digital still camera 200 in which a GPS module 10 is built according to an embodiment of the present disclosure.

[Fig. 17A] Fig. 17A is a flowchart illustrating operations of a GPS module 10 and a digital still camera 200 according to an embodiment of the present disclosure.

[Fig. 17B] Fig. 17B is a flowchart illustrating operations of a GPS module 10 and a digital still camera 200 according to an embodiment of the present disclosure.

[Fig. 18A] Fig. 18A is a flowchart illustrating operations of a GPS module 10 and a digital still camera 200 according to an embodiment of the present disclosure.

[Fig. 18B] Fig. 18B is a flowchart illustrating operations of a GPS module 10 and a digital still camera 200 according to an embodiment of the present disclosure.

Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

Further, the description will proceed in the following order.

<1. Embodiment of Present Disclosure>
[1-1. Hardware Configuration of GPS Module According to Present Disclosure]
[1-2. Synchronization Reestablishing Method]
<2. Explanation of Device Having GPS Module>
<3. Conclusion>

[1-1. Hardware Configuration of GPS Module]

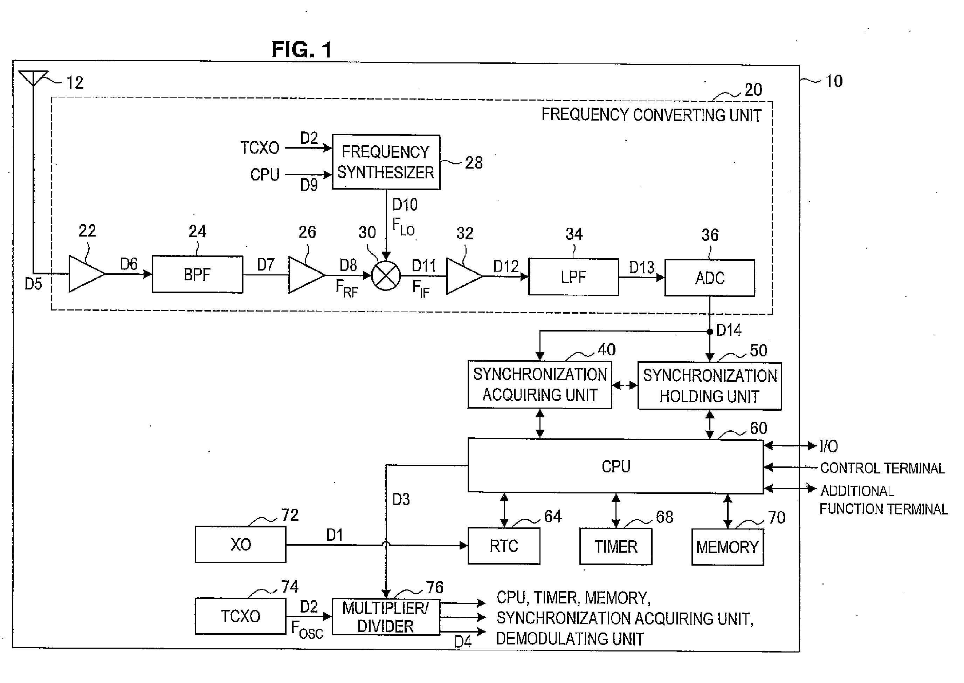

First, a hardware configuration of a GPS module according to the present disclosure will be described. Fig. 1 is a block diagram illustrating an example of a hardware configuration of a GPS module 10 according to the present disclosure. Hereinafter, the hardware configuration of the GPS module will be described with reference to Fig. 1.

Referring to Fig. 1, the GPS module 10 includes an antenna 12, a frequency converting unit 20, a synchronization acquiring unit 40, a synchronization holding unit 50, a central processing unit (CPU) 60, a real time clock (RTC) 64, a timer 68, a memory 70, an XO (a crystal oscillator, an X'tal Oscillator) 72, a temperature compensated X'tal oscillator (TCXO) 74, and a multiplier/divider 76.

The XO 72 oscillates a signal D1 having a predetermined frequency (for example, about 32.768 kHz), and supplies the oscillated signal D1 to the RTC 64. The TCXO 74 oscillates a signal D2 having a different frequency (for example, about 16.368 MHz) from that of the XO 72, and supplies the oscillated signal D2 to the multiplier/divider 76 and a frequency synthesizer 28.

The multiplier/divider 76 performs either or both of multiplication and division on the signal D2 supplied from the TCXO 74 based on an instruction from the CPU 60. Then, the multiplier/divider 76 supplies a signal D4 obtained by performing either or both of multiplication and division to the frequency synthesizer 28 of the frequency converting unit 20, an analog-to-digital converter (ADC) 36, the CPU 60, the timer 68, the memory 70, the synchronization acquiring unit 40, and the synchronization holding unit 50.

The antenna 12 receives a radio signal (for example, a radio frequency (RF) signal in which a carrier of 1575.42 MHz is spread) including a navigation message or the like transmitted from a GPS satellite which is a satellite of the GPS, converts the radio signal into an electric signal D5, and supplies the electric signal D5 to the frequency converting unit 20.

The frequency converting unit 20 includes a low noise amplifier (LNA) 22, a band pass filter (BPF) 24, an amplifier 26, a frequency synthesizer 28, a multiplier 30, an amplifier 32, a low pass filter (LPF) 34, and an analog digital converter (ADC) 36. The frequency converting unit 20 down-converts the signal D5 having a high frequency of 1575.42 MHz received through the antenna 12 into a signal D14 having, for example, a frequency of about 1.023 MHz for simple digital signal processing as will be described below.

The LNA 22 amplifies the signal D5 supplied from the antenna 12, and supplies the amplified signal to the BPF 24. The BPF 24 is configured with a surface acoustic wave (SAW) filter, extracts a specific frequency component from a frequency component of a signal D6 amplified by the LNA 22, and supplies the extracted frequency component to the amplifier 26. The amplifier 26 amplifies a signal D7 (a frequency $F_{RF}$) having the frequency component extracted by the BPF 24, and supplies the amplified signal to the multiplier 30.

The frequency synthesizer 28 generates a signal D10 having a frequency $P_{LO}$ using the signal D2 supplied from the TCXO 74 based on an instruction D9 from the CPU 60. Then, the frequency synthesizer 28 supplies the generated signal D10 having the frequency $F_{LO}$ to the multiplier 30.

The multiplier 30 multiplies the signal D8 having the frequency $F_{RF}$ supplied from the amplifier 26 by the signal D10 having the frequency $F_{LO}$ supplied from the frequency synthesizer 28. In other words, the multiplier 30 down converts the frequency signal into an IF signal D11 (for example, an IF frequency signal having a frequency of about 1.023 MHz).

The amplifier 32 amplifies the IF signal D11 down-converted by the multiplier 30, and supplies the amplified IF signal to the LPF 34.

The LPF 34 extracts a low-frequency component from the frequency component of the IF signal D12 amplified by the amplifier 30, and supplies a signal D 13 having the extracted low-frequency component to the ADC 36. Fig. 1 has been described in connection with the example in which the LPF 34 is arranged between the amplifier 32 and the ADC 36, but a BPF may be arranged between the amplifier 32 and the ADC 36.

The ADC 36 converts the IF signal D13 of the analog type supplied from the LPF 34 into a signal of a digital type by sampling, and supplies an IF signal D14 converted into the signal of the digital type to the synchronization acquiring unit 40 and the synchronization holding unit 50 bit by bit.

The synchronization acquiring unit 40 performs synchronization acquisition on a pseudo-random noise (PRN) code of the IF signal D14 supplied from the ADC 36 using the signal D3 supplied from the multiplier/divider 76 based on control by the CPU 60. Further, the synchronization acquiring unit 40 detects a carrier frequency of the IF signal D14. Then, the synchronization acquiring unit 40 supplies the phase of the PRN code, the carrier frequency of the IF signal D14, or the like to the synchronization holding unit 50 and the CPU 60.

The synchronization holding unit 50 holds synchronization of the PRN code and the carrier of the IF signal D14 supplied from the ADC 36 using the signal D3 supplied from the multiplier/divider 76 based on control by the CPU 60. More specifically, the synchronization holding unit 50 operates using the phase of the PRN code or the carrier frequency of the IF signal D 14 supplied from the synchronization acquiring unit 40 as an initial value. Then, the synchronization holding unit 50 demodulates a navigation message included in the IF signal D14 supplied from the ADC 36, and supplies the demodulated navigation message, the phase of the PRN code and the carrier frequency of high accuracy to the CPU 60.

The CPU 60 calculates the position of the GPS module 10 by calculating the position and the speed of each GPS satellite based on the navigation message, the phase of the PRN code, and the carrier frequency supplied from the synchronization holding unit 50. Further, the CPU 60 may correct the time information of the RTC 64 based on the navigation message. Further, the CPU 60 may be connected to a control terminal, an input/output (I/O) terminal, an additional function terminal, or the like and execute various kinds of control processes.

The RTC 64 measures a time using the signal D1 having a predetermined frequency supplied from the XO 72. The time measured by the RTC 64 is appropriately corrected by the CPU 60.

The timer 68 counts a time using the signal D4 supplied from the multiplier/divider 76. The timer 68 is referred to, for example, when a decision on a start timing of various kinds of control by the CPU 60 is made. For example, the CPU 60 refers to the timer 68 when deciding a timing to start an operation of a PRN code generator of the synchronization holding unit 50 based on the phase of the PRN code acquired by the synchronization acquiring unit 40.

The memory 70 includes a random access memory (RAM), a read-only memory (ROM), or the like, and has a function as a work space used by the CPU 60, a program storage unit, a navigation message storage unit, or the like. In the memory 70, the RAM is used as a work area when various kinds of processes are performed by the CPU 60 or the like. In addition, the RAM may be used for buffering of various kinds of input data and to hold the ephemeris and the almanac which are trajectory information of the GPS satellite obtained by the synchronization holding unit 50 and interim data or calculation result data generated by a calculation process. Further, in the memory 70, the ROM is used as a means for storing various kinds of programs, fixed data, or the like. In the memory 70, a non-volatile memory may be used as a means for storing the ephemeris and the almanac which are the trajectory information of the GPS satellite, position information of a positioning result, an error amount of the TCXO 74, or the like while the GPS module 10 is powered off.

In the configuration of the GPS module 10 illustrated in Fig. 1, the blocks excluding the XO 72, the TCXO 74, the antenna 12, and the BPF 24 may be mounted in an integrated circuit configured with a single chip.

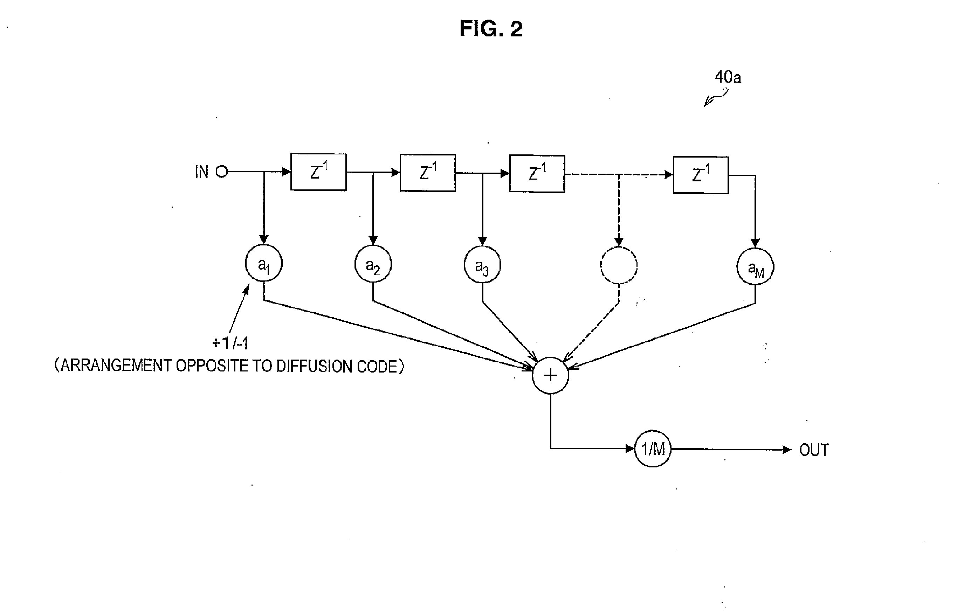

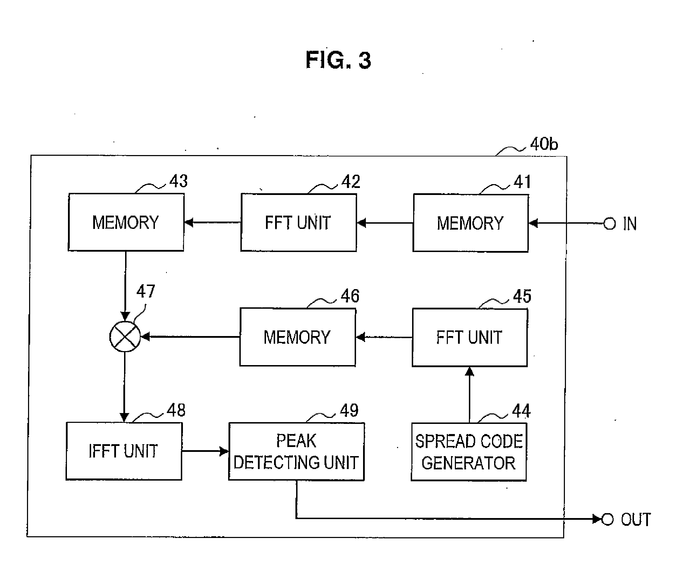

In addition, the synchronization acquiring unit 40 uses a matched filter, for example, in order to perform synchronization acquisition of a spread code at a high speed. Specifically, for example, the synchronization acquiring unit 40 may use a so-called transversal filter 40a illustrated in Fig. 2 as the matched filter. Alternatively, for example, the synchronization acquiring unit 40 may use a digital matched filter 40b using a fast Fourier transform (FFT) illustrated in Fig. 3 as the matched filter.

For example, referring to Fig. 3, the digital matched filter 40b includes a memory 41, an FFT unit 42, a memory 43, a spread code generator 44, an FFT unit 45, a memory 46, a multiplier 47, an inversed fast Fourier transform (IFFT) unit 48, and a peak detector 49.

The memory 41 buffers the IF signal sampled by the ADC 36 of the frequency converting unit 20. The FFT unit 42 reads the IF signal buffered by the memory 41 and performs the FFT on the IF signal. The memory 43 buffers a frequency domain signal converted from the IF signal of the time domain which has been subjected to the FFT in the FFT unit 42.

Meanwhile, the spread code generator 44 generates the same spread code as a spread code in the RF signal received from the GPS satellite. The FFT unit 45 performs the FFT on the spread code generated by the spread code generator 44. The memory unit 46 buffers the spread code of the frequency domain converted from the spread code of the time domain by the FFT in the FFT unit 45.

The multiplier 47 multiplies the frequency domain signal buffered in the memory 43 by the spread code of the frequency domain buffered in the memory 46. The IFFT unit 48 performs an inverse FFT on the multiplied frequency domain signal output from the multiplier 47. As a result, a correlation signal of the time domain between the spread code in the RF signal from the GPS satellite and the spread code generated by the spread code generator 44 is acquired. Then, the peak detector 49 detects a peak of the correlation signal output from the IFFT unit 48.

The digital matched filter 40b may be implemented as software executing processes of the respective units such as the FFT units 42 and 45, the spread code generator 44, the multiplier 47, the IFFT unit 48, and the peak detector 49 using a digital signal processor (DSP).

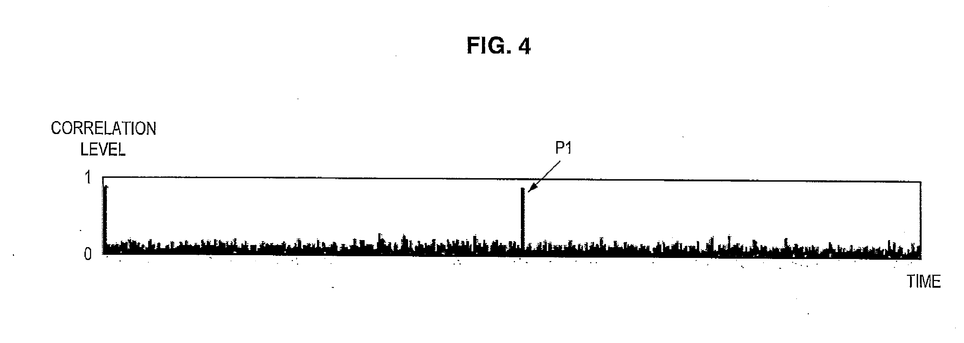

Fig. 4 is an explanatory diagram illustrating an example of a peak of the correlation signal acquired by the digital matched filter 40a or 40b. Referring to Fig. 4, a peak P1 at which a correlation level protrudes in an output waveform of a correlation signal corresponding to one period is detected. The position of the peak P1 on a time axis corresponds to the head of the spread code. In other words, the synchronization acquiring unit 40 can detect synchronization of the reception signal received from the GPS satellite (that is, detect the phase of the spread code) by detecting the peak P1.

[1-2. Outline of Synchronization Reestablishment]

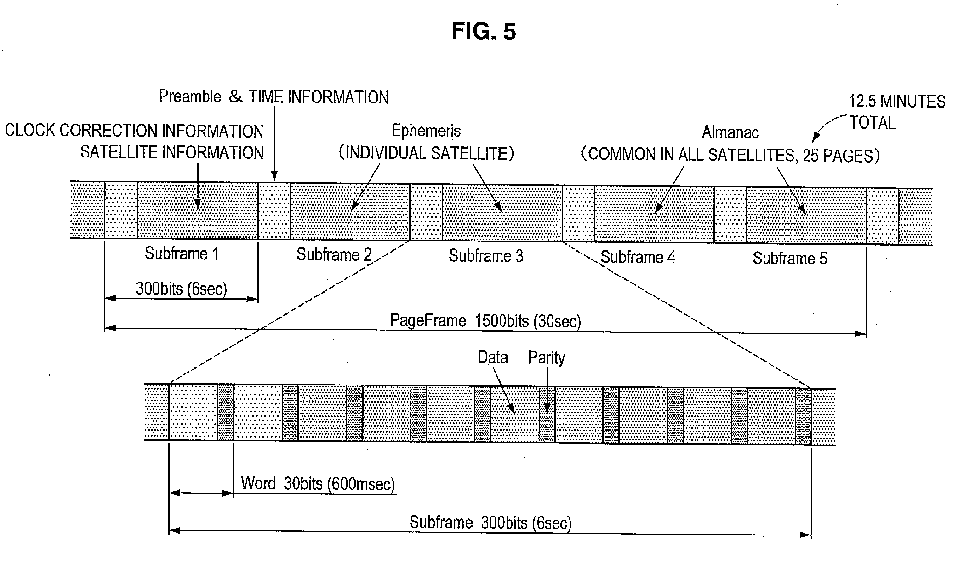

Next, an outline of synchronization reestablishment by the GPS module 10 according to the present embodiment will be described. Fig. 5 is an explanatory diagram illustrating a data structure of the ephemeris and the almanac which are trajectory information of the satellite. In the signal received from the GPS satellite, a data rate is 50 bps, one frame includes five sub frames, clock correction information and satellite information are included in a first sub frame, the ephemeris, which is trajectory information broadcast from an individual satellite, is included in second and third sub frames, and the almanac, which is trajectory information commonly broadcast from all satellites, is included in fourth and fifth sub frames.

A preamble and data are included in one sub frame, and one sub frame is configured to include 10 sets of 30-bit data.

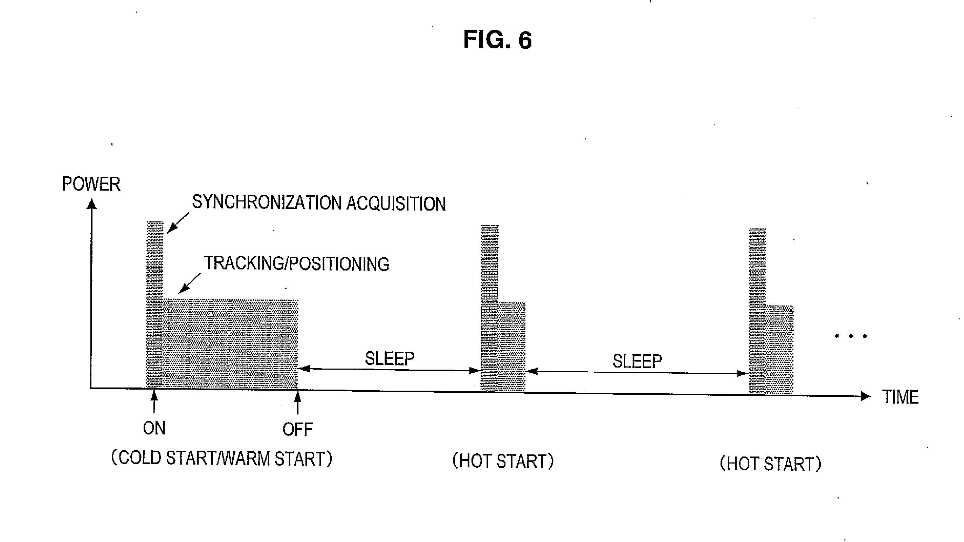

Fig. 6 is an explanatory diagram illustrating a concept of an intermittent operation by the hot start. As described above, in the intermittent operation method of performing the initial start of the GPS receiver typical for reestablishment of synchronization, generally, after initial positioning is established by the cold or warm start at the initial stage, the intermittent operation is performed, and the hot start that causes positioning to be performed in a short time is performed as illustrated in Fig. 6. In the case of this method, in the GPS receiver, the synchronization acquiring unit (for example, the synchronization acquiring unit 40 of Fig. 1) operates on the reception signal of the satellite. The synchronization acquiring unit has a large processing load and so is likely to be much higher in power consumption than a synchronization holding unit (for example, the synchronization holding unit 50 of Fig. 1), and thus there occurs a problem when peak power is specified by a battery rather than average power.

In the present embodiment, synchronization is re-established by the synchronization holding unit without using the synchronization acquiring unit, and thus average power and peak power of the GPS module are lowered. At this time, by operating some components in the synchronization holding unit rather than all components in the synchronization holding unit, synchronization of the satellite signal is held in a pseudo manner during a sleep time period.

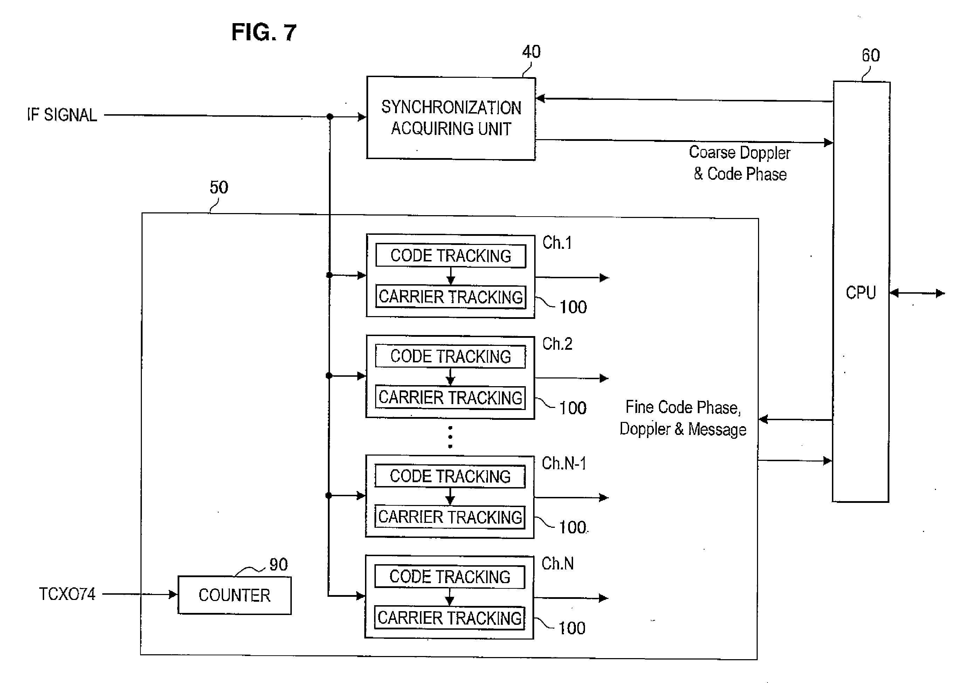

Fig. 7 is an explanatory diagram illustrating a configuration of the synchronization holding unit 50 included in the GPS module 10 illustrated in Fig. 1. As illustrated in Fig. 7, the synchronization holding unit 50 includes a counter 90 that performs counting based on a clock from the TCXO 74 and channel circuits 100, each of which is disposed to correspond to a GPS satellite and holds synchronization of the GPS satellite. The channel circuit 100 includes a code tracking loop for performing synchronization of a code and a carrier tracking loop for performing synchronization of a carrier. As the plurality of channel circuits 100 are disposed as described above, the synchronization holding unit 50 can hold synchronization of a plurality of GPS satellites in parallel.

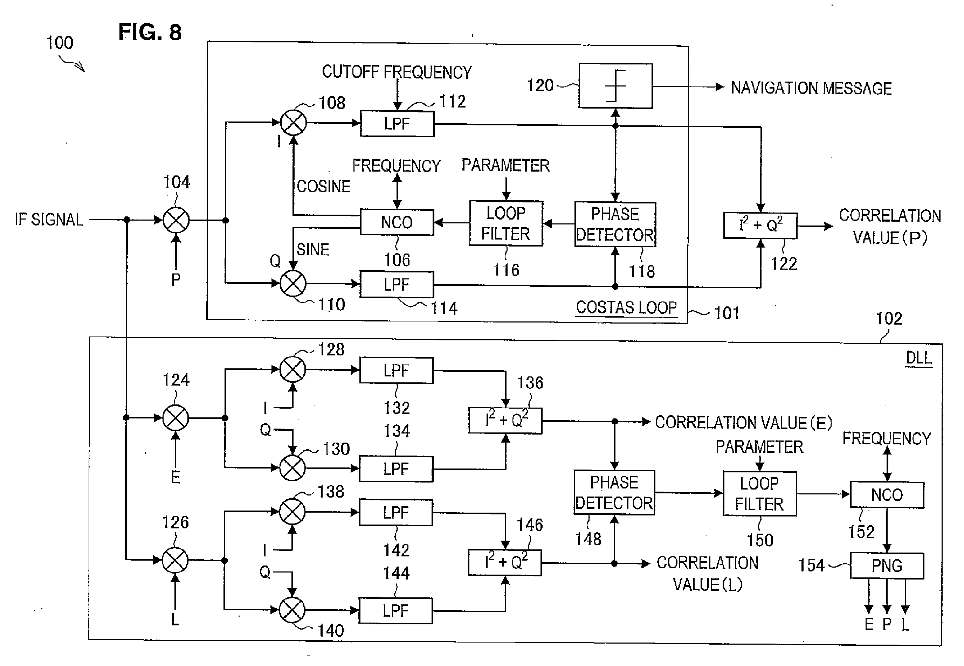

Fig. 8 is an explanatory diagram illustrating a configuration of the channel circuit 100 illustrated in Fig. 7. As illustrated in Fig. 8, the channel circuit 100 includes a Costas loop 101 and a DLL 102.

A signal obtained by multiplying an IF signal corresponding to the IF signal D14 by a spread code (Prompt (P) in Fig. 8) having a phase P generated by a spread code generator (a PN generator; hereinafter referred to as "PNG") 154 which will be described later through a multiplier 104 is input to the Costas loop 101. Meanwhile, in the channel circuit 100, an IF signal corresponding to the IF signal D14 obtained by the antenna 12 and the frequency converting unit 20 is input to the DLL 102.

In the Costas loop 101, a multiplier 108 multiplies an input signal by a cosine component of a reproduction carrier generated by a numeric controlled oscillator (NCO) 106. Meanwhile, a multiplier 110 multiplies the input signal by a sine component of the reproduction carrier generated by the NCO 106. In the Costas loop 101, a predetermined frequency band component of a signal of an in-phase component obtained by the multiplier 108 passes through an LPF 112, and this signal is supplied to the phase detector 118, the binarizing circuit 120, and the square sum calculating circuit 122. On the other hand, in the Costas loop 101, a predetermined frequency band component of a signal of a quadrature component obtained by the multiplier 110 passes through an LPF 114, and this signal is supplied to the phase detector 118 and the square sum calculating circuit 122. In the Costas loop 101, phase information detected by the phase detector 118 based on the signals respectively output from the LPFs 112 and 114 is supplied to the NCO 106 through a loop filter 116. In the Costas loop 101, the signals respectively output from the LPFs 112 and 114 are supplied to the square sum calculating circuit 122, and a square sum ($I^2+Q^2$) calculated by the square sum calculating circuit 122 is output as a correlation value (P) on a spread code having a phase P. In addition, in the Costas loop 101, the signal output from the LPF 112 is supplied to the binarizing circuit 120, and information obtained by binarization is output as a navigation message.

Meanwhile, in the DLL 102, a multiplier 124 multiplies the input IF signal by a spread code (Early (E) in Fig. 8) having a phase E earlier than P generated by a PNG 154. Further, a multiplier 126 multiplies the input IF signal by a spread code (Late (L) in Fig. 8) having a phase L later than P generated by the PNG 154. In the DLL 102, a multiplier 128 multiplies the signal obtained by the multiplier 124 by a cosine component of a reproduction carrier generated by the NCO 106 in the Costas loop 101. Further, a multiplier 130 multiplies the signal obtained by the multiplier 124 by a sine component of the reproduction carrier generated by the NCO 106. Then, in the DLL 102, a predetermined frequency band component of a signal of the in-phase component obtained by the multiplier 128 passes through an LPF 132, and this signal is supplied to a square sum calculating circuit 136. Meanwhile, in the DLL 102, a predetermined frequency band component of a signal of the quadrature component obtained by the multiplier 130 passes through an LPF 134, and this signal is supplied to the square sum calculating circuit 136. Further, in the DLL 102, a multiplier 138 multiplies the signal obtained by the multiplier 126 by a cosine component of the reproduction carrier generated by the NCO 106 in the Costas loop 101. Further, a multiplier 140 multiplies the signal obtained by the multiplier 126 by a sine component of the reproduction carrier generated by the NCO 106. Then, in the DLL 102, a predetermined frequency band component of a signal of the in-phase component obtained by the multiplier 138 passes through an LPF 142, and this signal is supplied to the square sum calculating circuit 146. Meanwhile, in the DLL 102, a predetermined frequency band component of a signal of the quadrature component obtained by the multiplier 140 passes through an LPF 144, and this signal is supplied to the square sum calculating circuit 146.

In the DLL 102, the signals respectively output from the square sum calculating circuits 136 and 146 are supplied to a phase detector 148, and phase information detected by the phase detector 148 based on the signals is supplied to an NCO 152 through a loop filter 150. In addition, the spread codes of respective phases E, P, and L are generated through the PNG 154 based on a signal having a predetermined frequency generated by the NCO 152. Further, in the DLL 102, a square sum ($I^2+Q^2$) calculated by the square sum calculating circuit 136 is output as a correlation value (E) on the spread code having the phase E. Furthermore, in the DLL 102, a square sum ($I^2+Q^2$) calculated by the square sum calculating circuit 146 is output as a correlation value (L) on the spread code having the phase L.

Next, intermittent synchronization held by the synchronization holding unit 50 having the above configuration will be described in detail.

In the present embodiment, during the sleep time period, only the counter 90 is operated, and the remaining components are stopped. Thus, re-synchronization is performed such that after the recovery from the sleep state, a predictive calculation is performed on a starting point of a diffusion code cycle from an elapsed time counted by the counter 90 for each satellite, and the diffusion code generator including the NCO 152 and the PNG 154 which is assigned for each satellite is started according to the starting point predicted in the synchronization holding unit 50. As a result, synchronization can be recovered in a very short time after the recovery from the sleep state, positioning can be performed in a short time without basically operating the synchronization acquiring unit 40, and thus average and peak power consumption can be reduced.

In this method, the GPS reception oscillator (typically, the TCXO 74) operates even in the sleep state, and thus power consumption in the sleep state is greater than in the method using the RTC. However, in recent years, power consumption of the TCXO has also been reduced, and when positioning needs to be performed at a certain frequency even though continuous positioning need not be performed, quasi-continuous positioning can be performed at stable and low power.

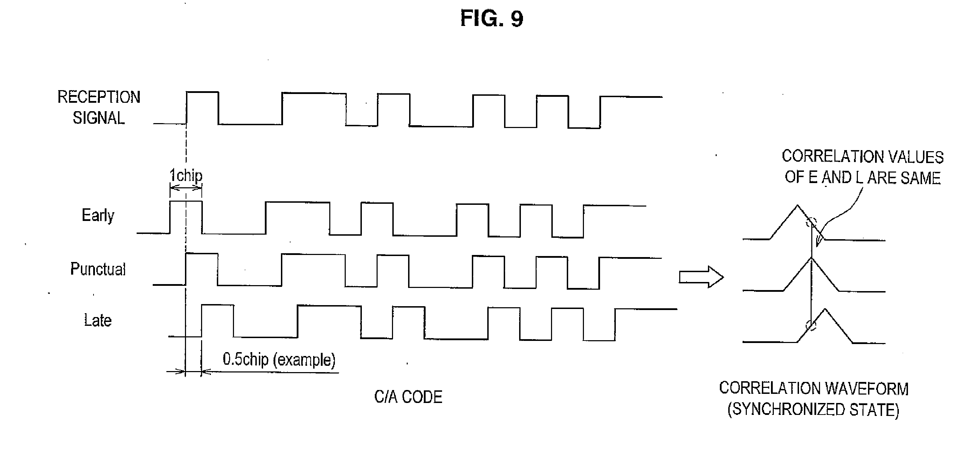

In the operation state in which the signal can be received from the GPS satellite and positioning can be performed, synchronization of the spread code in the reception signal and the phase of the diffusion code generator including the NCO 152 and the PNG 154 illustrated in Fig. 8 are held according to control of the DLL 102 as illustrated in Fig. 9. However, when the GPS module 10 enters the sleep state and the synchronization holding unit 50 is completely stopped, synchronization is not held. In order to instantly perform re-synchronization after the recovery from the sleep state, it is necessary to know the phase of the diffusion code with an error of within one chip (about 1 $\mu$s), but it is difficult to acquire re-synchronization since information of the phase of the diffusion code is lost in the sleep state.

In this regard, in the present embodiment, the counter 90, which is a counter of measuring a timing of the satellite signal, is operated in the sleep state. The counter 90 counts a higher-resolution time than the RTC 64. Thus, when synchronization is established, the synchronization holding unit 50 can specify a timing of the reception signal from the satellite, and can perform a positioning calculation using a high-resolution time of the measured timing.

The diffusion code generator is configured such that the NCO 152 and the PNG 154 illustrated in Fig. 8 are combined, and the PNG 154 can start with an initial phase of the spread code at a given time counted by the counter 90. In the case of the GPS, since the chip rate of the diffusion code in the satellite is 1.023 MHz, the NCO is configured to vary the frequency centering on 1.023 MHz, and the phase of the diffusion code can become early or late by this frequency setting.

The chip rate (fc Hz) of the diffusion code in the reception signal measured based on the GPS reception oscillator and a shift ($\Delta$p [chip]; 1 [chip] is assumed to be 1/1.023 [$\mu$sec]) of the phase according to an elapsed time on the chip rate of 1.023 MHz are known to be in proportion to a difference ($\Delta$f [Hz]) with a nominal value 1,575.42 [MHz] of the carrier frequency in the reception signal measured based on the same GPS reception oscillator and an elapsed time (t [sec]) and to have the following relation:

$$fc = 1.023 \times 10^6 + \Delta f/1540 \text{ [Hz]} ---(1)$$

$$\Delta p = -\Delta f/1540 \cdot t ---(2)$$

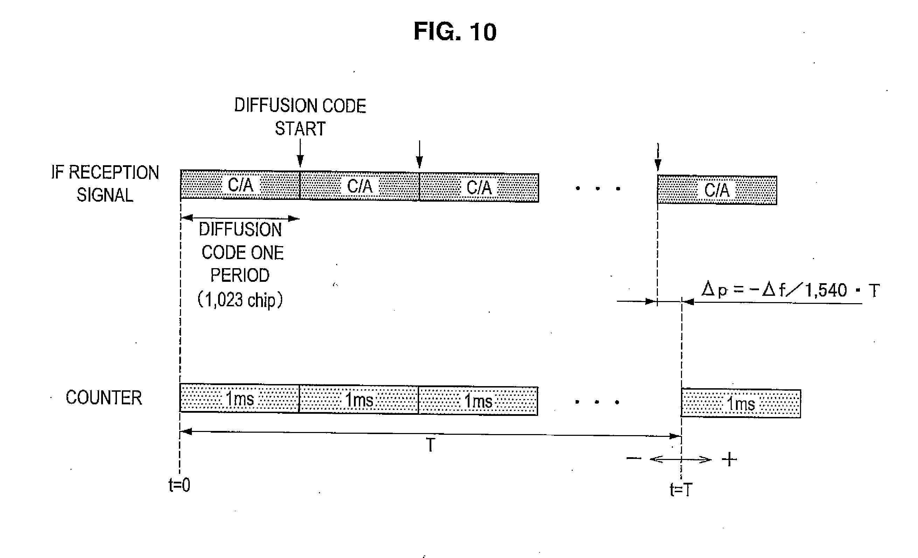

Fig. 10 is an explanatory diagram illustrating a relation between a reception signal and an elapsed time. The carrier tracking loop that performs synchronization of the carrier can detect $\Delta$f for each satellite. The carrier frequency of the reception signal differs according to a satellite due to a difference in a Doppler shift amount, and thus a shift in the phase of the diffusion code differs according to a satellite.

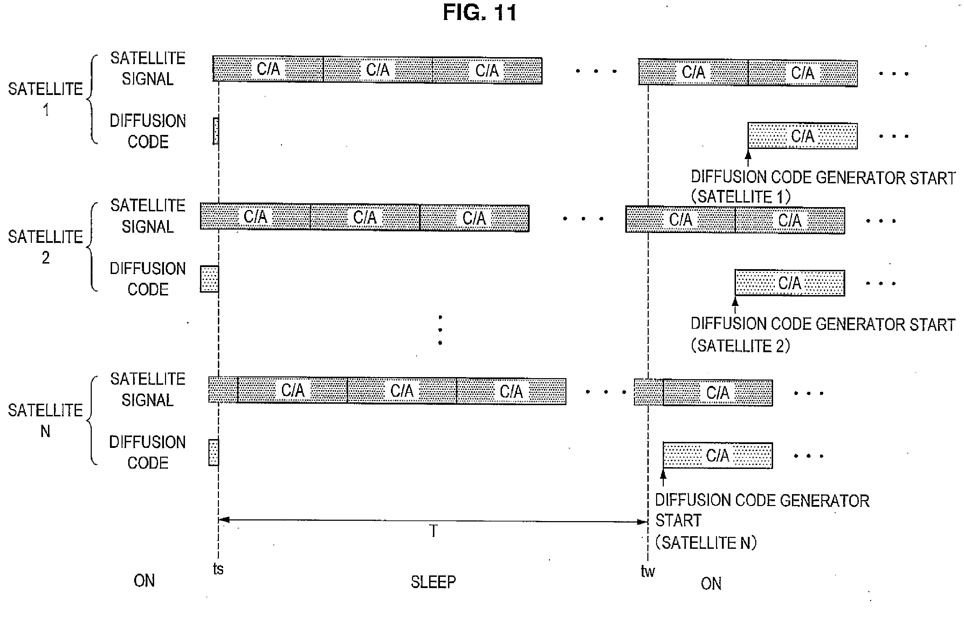

However, since the counter 90 operates in the sleep state, and the phase of the diffusion code and $\Delta$f at a predetermined time before entering the sleep state on the satellite in which synchronization is established before entering the sleep state are known, the phase of the diffusion code of each satellite at a given time after the recovery from the sleep state can be predicted by calculating Formula (2), and the chip rate of the diffusion code can be predicted by calculating Formula (1). Thus, the synchronization holding operation can be recovered with a small phase error by operating the whole synchronization holding unit 50 such that $\Delta$p, t, and the frequency of the NCO 152 at the starting point of the diffusion code cycle of each satellite after the recovery from the sleep state, that is, when the phase is zero (0), are decided, and the diffusion code generator is started after a time t elapses from the predetermined time. Fig. 11 is an explanatory diagram illustrating an example in which the starting point of the diffusion code generator is appropriately set for each satellite. When the whole synchronization holding unit 50 is recovered from the sleep state with the small phase error, the phase error returns to near zero (0) by control of the synchronization holding unit, and synchronization can be instantly re-established.

As described above, the intermittent operation capable of instantly reestablishing the synchronization after the recovery from the sleep state can be performed such that only the counter 90 is operated and the remaining components are stopped during the sleep time period, and after the recovery from the sleep state, a predictive calculation on the starting point of the diffusion code cycle from the elapsed time measured by the counter 90 is performed for each satellite and the diffusion code generator assigned to each satellite starts according to the starting point predicted in the synchronization holding unit 50.

In the sleep state of the GPS module 10, it is unnecessary to receive the signal from the GPS satellite and to perform a positioning calculation of a current value. Thus, the operations of the frequency converting unit 20, the synchronization acquiring unit 40, the CPU 60, and the memory 70 other than the backup memory excluding the diffusion code generator and the counter 90 of the synchronization holding unit 50 may be stopped. As the operation is stopped as described above, power consumption of the GPS module 10 in the sleep state substantially depends on the TCXO 74 serving as the GPS reception oscillator, and the diffusion code generator and the counter 90 of the synchronization holding unit 50. The backup memory is used to hold position information before the sleep state or the like. When a non-volatile memory such as a flash memory can be used, a backup memory by an SRAM is not necessarily necessary.

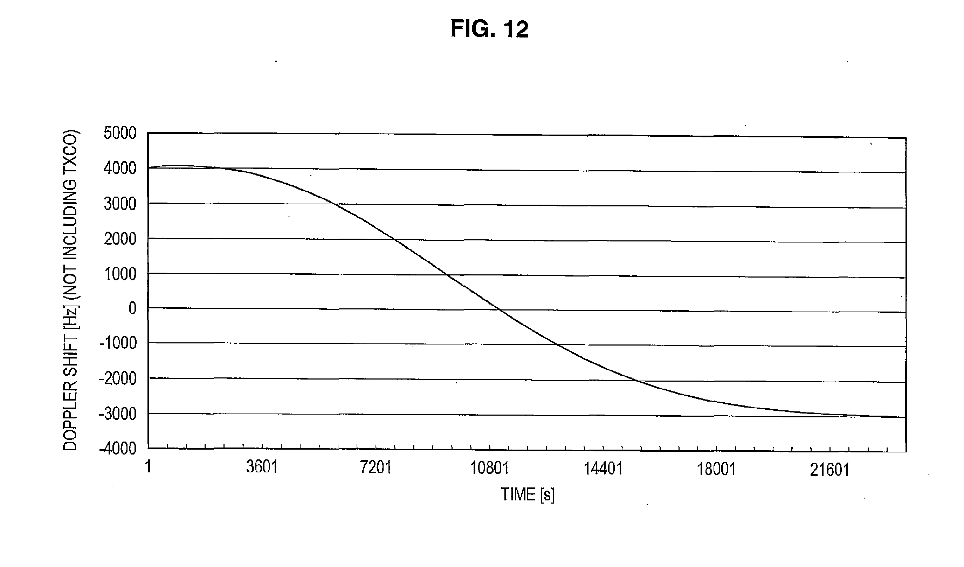

The Doppler shift of the satellite is not a fixed value and changes over time, and a chip rate changes due to the change. Fig. 12 is an explanatory diagram illustrating an example of a change in the Doppler shift of the satellite through a graph. In the graph illustrated in Fig. 12, a horizontal axis represents a time, and a vertical axis represents the Doppler shift. It can be understood that the Doppler shift of the satellite is not a fixed value and changes over time as described above. For this reason, when an intermittent time interval is short, prediction by Formulas (1) and (2) is enough, but when an intermittent time is long, an error between a prediction value and an actual value of the phase of the diffusion code exceeds one chip, and thus it is difficult to reestablish instantly after the recovery from the sleep state. This is more remarkable as a time rate of change in the Doppler shift increases, and even in an ideal state in which there is no change in the oscillator at all, for example, 30 seconds may not be taken until an error between a prediction value and an actual value of the phase of the diffusion code exceeds one chip. Thus, in order to increase the intermittent time, it is desirable to correct the predictive calculation of the phase of the diffusion code in consideration of a change in the Doppler shift.

When fc, $\Delta$f, and $\Delta$p in Formula (1) and Formula (2) are converted into functions of a time t in consideration of a temporal change in the Doppler shift of the satellite illustrated in Fig. 12, the following formulas are obtained:

$$fc(t) = 1.023 \times 10^6 + \Delta f(t)/1540 \ [\text{Hz}] \ \text{---(3)}$$

$$\Delta p(t) = -\int_0^t \Delta f(t)/1540 \cdot dt \ \text{---(4)}$$

When t=0 represents a time serving as a starting point and an intermittent time is an order of a fraction, the change in the Doppler shift illustrated in Fig. 12 can be approximated by a primary expression as follows:

$$\Delta f(t) = \Delta f(0) \ (1 + a \cdot t) \quad \text{---(5)}$$

$$\Delta p(t) = -\Delta f(0)/1540 \cdot t \cdot (1 + a/2 \Delta f(0) \cdot t) \quad \text{---(6)}$$

Here, $\Delta f(0) = \Delta f(t = 0)$, a represents an inclination of a temporal change, that is, a differential value in a curve illustrated in Fig. 12. Formulas (5) and (6) in which a is zero (0) match Formulas (1) and (2), respectively.

The prediction by Formulas (1) and (2) means the same thing as the fact that the chip rate fc is expected in Formulas (5) and (6) during the sleep state:

$$fc = 1.023 \times 10^6 + \Delta f(0)/1540 \ (7)$$

Thus, the temporal change in the Doppler shift is not considered in the sleep state. For this reason, the phase of the diffusion code is shifted on the time t by:

$$\Delta p(t) = -a/2 \cdot t^2/1540 \ (8)$$

For example, when t is 30 sec and a is 1 Hz/sec, the shift is 0.29 chip, and this shift is within the range in which the shift can be corrected by control of the DLL after the recovery from the sleep state. However, when t is 60 sec, the shift is 1.17 chips, and thus after the recovery from the sleep state, it is difficult for the DLL to correct the shift, and it is difficult to instantly re-synchronize the reception signal from the satellite.

However, the GPS module 10 holds an actual measured value before entering the sleep state and thus can calculate $\Delta$f and a (= ($\Delta$f(T) - $\Delta$f(0))/T) after t (= T) seconds using the ephemeris and the positioning result. Thus, the GPS module 10 can correct the phase shift of the diffusion code after t (= T) seconds such that $\Delta$p(T) serving as the starting point of the diffusion code cycle is decided using Formula (6) for a calculation of the phase shift of the diffusion code by the Doppler shift after t (= T) seconds, and the starting point of the phase of the diffusion code is predicted by solving a quadric equation on a time t (= T) for each satellite. The frequency of the NCO 152 may be set to a value calculated as t (= T) in Formula (3).

Further, when the GPS module 10 can decide a sleep time, if Formula (6) is corrected using T as the sleep time and the diffusion code generator including the NCO 152 and the PNG 154 is started after the sleep state, the shift of the phase of the diffusion code has a value sufficiently smaller than one chip, and thus re-synchronization can be instantly established by control of the DLL 102 in the channel circuit 100.

In the method of correcting the change in the Doppler shift, the method of carrier correction by the Doppler shift has been described through primary approximation by the Doppler shift expressed in Formula (5), but needless to say, second or higher order approximation can be performed.

In the actual use state, the GPS module 10 moves, and the shift of the phase of the diffusion code by the Doppler shift is added. An actual measured value Δf(0) at a point in time of t = 0 includes a portion corresponding to the Doppler shift by movement of the GPS module 10, and a moving velocity and an acceleration of the GPS module 10 at the point in time of t = 0 can be calculated. Thus, for example, by primarily approximating the Doppler shift by movement of the GPS module 10 and adding the corresponding portion to Δf(T) of Formula (7) or Formula (8), the shift of the phase of the diffusion code by movement of the GPS module 10 can be corrected within a range in which approximation is established.

Using the above-described correction, the synchronization holding unit 50 can establish re-synchronization by control of the DLL 102 in the channel circuit 100. For example, when the GPS module 10 can decide a time to enter the sleep state and a time to recover from the sleep state, the above-described correction calculation may be performed before entering the sleep state, and a start-up time of the diffusion code generator on each satellite after the recovery from the sleep state may be decided in advance. When the time to enter the sleep state and the time to recover from the sleep state are decided by, for example, a host CPU of a system in which the GPS module 10 is mounted rather than the GPS receiving function, it is difficult to know the sleep time until a next start-up is performed through the GPS receiving function itself when entering the sleep state. In this case, the system decides the time to enter the sleep state and the time to recover from the sleep state, and transfers the decided times to the GPS module 10. Preferably, the GPS module 10 performs the above-described correction based on the transferred time information.

There is a case in which it is difficult for the host CPU of a system in which the GPS module 10 is mounted to decide the sleep time until a next start-up is performed before entering the sleep state. Further, even when the host CPU decides the time until a next start up is performed, the time until a next start up is performed may differ. For example, a case in which positioning is performed depending on the user's operation such as a camera corresponds to the above case. In this case, the GPS module 10 preferably decides the start-up time of the diffusion code generator on each satellite based on Formula (6) in the same manner after the recovery from the sleep state.

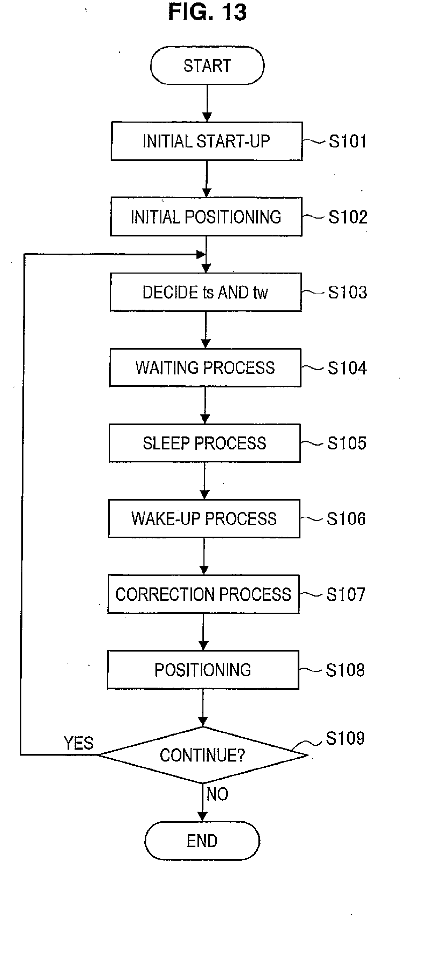

Next, an operation of the GPS module 10 will be described. Fig. 13 is a flowchart illustrating an operation of the GPS module 10. Hereinafter, an operation of the GPS module 10 will be described with reference to Fig. 13.

First, the GPS module 10 initially starts, and the components of the GPS module 10 illustrated in Fig. 1 are supplied with electric power (step S101). Then, the GPS module 10 receives a radio wave from the GPS satellite and performs initial positioning (step S102). The initial start and initial positioning of the GPS module 10 correspond to a time period of first synchronization acquisition and tracking/positioning illustrated in Fig. 6. Through the initial positioning in step S102, the GPS module 10 acquires the ephemeris.

When the initial positioning is executed in step S102, the GPS module 10 then decides a time ts to enter the sleep state and a time tw to recover from the sleep state (step S103). Any values may be set to the time ts to enter the sleep state and the time tw to recover from the sleep state according to an operation environment of the GPS module 10 (a device having the GPS module 10 therein, an operation state of a corresponding device, or the like).

When the time ts to enter the sleep state and the time tw to recover from the sleep state are decided in step S103, the GPS module 10 executes a waiting process of waiting until the time ts to enter the sleep state (step S104). Then, when the time ts to enter the sleep state comes, the GPS module 10 executes a sleep process of remaining in the sleep state until the time tw to recover from the sleep state (step S105). The sleep process operates only the counter 90 and stops the remaining components.

Then, when the time tw to recover from the sleep state comes according to time counting of the counter 90, the GPS module 10 executes a wake-up process of recovering from the sleep state (step S106). The wake-up process is a process of operating the components which are stopped in step S105. As the components stopped in step S105 operate, the GPS module 10 recovers from the sleep state.

When the wake-up process is executed in step S106, the GPS module 10 then executes a correction process using the time decided in step S103 (step S107). The correction process in step S107 is a process of setting a time to start up the synchronization holding unit 50 for each satellite after the time tw to recover from the sleep state, and specifically refers to the correction calculation using Formula (7).

When the correction process is executed in step S107, the GPS module 10 then executes a positioning process on a current value (step S108). As a result, even when the GPS module 10 is in the sleep state, synchronization holding can be performed in a pseudo manner, and the GPS module 10 can execute the positioning process immediately after the recovery from the sleep state.

When the positioning process is performed on the current value in step S108, the GPS module 10 then determines whether or not to continue transition to the sleep state (step S109). Whether or not to continue transition to the sleep state may be decided according to an operation environment of the GPS module 10 (a device having the GPS module 10 therein, an operation state of a corresponding device, or the like).

When it is determined in step S109 that transition to the sleep state is continued, the process returns to step S103, and the GPS module 10 decides the time ts to enter the sleep state and the time tw to recover from the sleep state. However, when it is determined in step S109 that transition to the sleep state is not continued, the GPS module 10 ends the process of transitioning to the sleep state.

The operation of the GPS module 10 has been described above with reference to Fig. 13. As the GPS module 10 operates as described above, even when the GPS module 10 is in the sleep state, synchronization can be held in a pseudo manner, and the GPS module 10 can execute the positioning process immediately after the recovery from the sleep state.

When a time at which the GPS module 10 enters the sleep state and a time at which the GPS module 10 recovers from the sleep state are decided by, for example, a host CPU of a system in which the GPS module 10 is mounted other than the GPS receiving function, it is difficult to know the sleep time until a next start-up is performed through the GPS receiving function itself when the GPS module 10 enters the sleep state. In this case, the system decides the time to enter the sleep state and the time to recover from the sleep state, and transfers the decided times to the GPS module 10 in which the GPS module 10 is built. Preferably, the GPS module 10 in which the GPS module 10 is built performs the above-described correction based on the transferred time information.

The intermittent operation method in which only the counter 90 is operated and the remaining components are stopped during the sleep time period, and after the recovery from the sleep state, a predictive calculation on the starting point of the diffusion code cycle from the elapsed time measured by the counter 90 is performed for each satellite, and the diffusion code generator assigned to each satellite starts according to the starting point predicted in the synchronization holding unit 50, and thus synchronization is recovered in a very short time after the recovery from the sleep state, and positioning is performed in a short time without operating the synchronization acquiring unit, so that average and peak power consumption are reduced has been described above using the GPS module 10 as an example. However, the present disclosure can be basically applied to a global navigation satellite system (GNSS) receiver rather than the GPS.

Further, in Fig. 7, the counter 90 is included in the synchronization holding unit 50, but the counter 90 need not necessarily be included in the synchronization holding unit 50, and the counter 90 may be disposed outside the synchronization holding unit 50.

In the method of operating the counter 90 during the sleep time period, as the TCXO 74 that is the oscillator for the GPS receiver operates, power consumption during the sleep time period is not reduced to almost zero, but the intermittent operation more stable than the method of operating only the RTC 64 during the sleep time period can be performed as described above. In the use in which the intermittent time is not intended to be particularly long, the counter 90 may also be stopped in the sleep state, and the RTC 64 that is less in accuracy than the TCXO 74 may be used in place of the time setting in the sleep state.

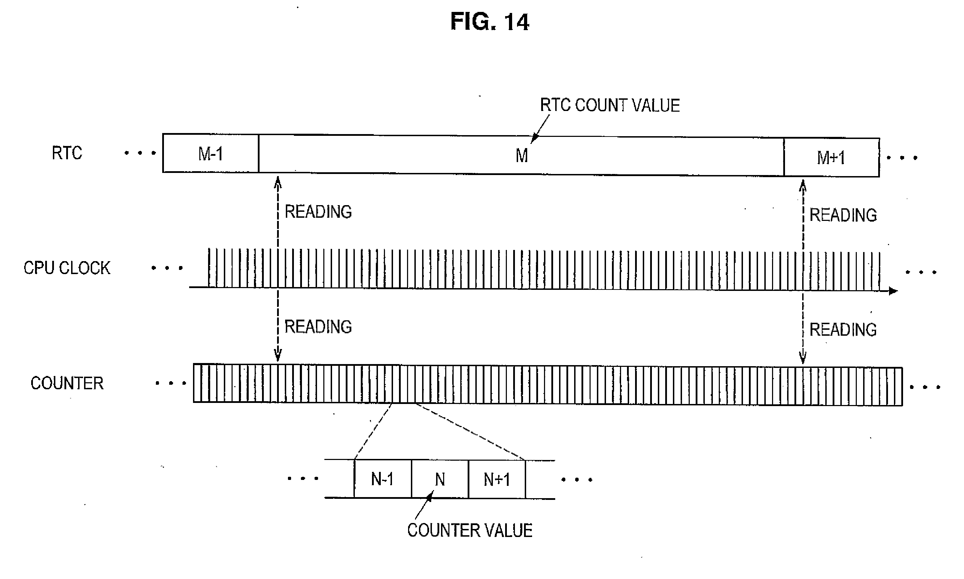

The GPS receiver typically includes the RTC, and the counter 90 and the RTC 64 operate at the same time in an active state as opposed to the sleep state. For example, as illustrated in Fig. 14, a function of reading a value of the counter 90 through the CPU 60 when a time of the RTC 64 changes can be easily implemented in the GPS module 10, and since a time by the RTC 64 can be tuned to an accurate GPS time in many cases, a similar function is provided. Further, in the actual GPS module, a CPU clock ratio of the RTC 64 and the counter 90 is much larger than in Fig. 14.

Using this function, the GPS module 10 can accurately detect the period of the RTC 64 by referring to the value of the counter 90 at a plurality of times by the RTC 64, and can convert a time elapsed in the RTC 64 in the sleep state into the elapsed time of the counter 90. The transition to the sleep state and the recovery from the sleep state are performed in synchronization with the RTC 64, and a plurality of sets of times of the RTC 64 and the values of the counter 90 are recorded in the backup memory (the memory 70) immediately before the sleep state. Further, when the sleep time can be converted into the elapsed time of the counter 90 using information stored in the backup memory after the recovery from the sleep state, by adding the value of the counter 90 to the converted value after the recovery, a method of instantly reestablishing synchronization without using the synchronization acquiring unit 40 can be similarly applied to the GPS module 10.

Since the time by the RTC 64 is less not only in accuracy but also in stability than the counter 90 using the clock of the TCXO 74 as a source, it is difficult to increase the intermittent time. However, when the temporal change in the frequency of the RTC 64 is a simple change in a predetermined period of time, the intermittent time can be increased by modeling the temporal change in the frequency of the RTC 64 and correcting the converted value. In other words, the memory 70 stores one or more ratios of one value of the counter 90 during two given points in time and elapsed times by the RTC 64 during the two given points in time. Then, when the sleep time period is completed, a ratio of the elapsed time of the counter 90 and the elapsed time of the RTC 64 is predicted using information of the ratios of the elapsed times stored in the memory 70, and the elapsed time of the RTC 64 is converted into the elapsed time of the counter 90 using the prediction result. As a result, the temporal change in the frequency of the RTC 64 can be modeled, and the intermittent time can be further increased.

For example, a frequency $fr(t)$ of the RTC 64 can be approximated by a primary expression in a certain time slot, and when the frequency is regarded to be constant in one period of the RTC 64, $fr(n)$ and one period length $Tr(n)$ of an $n^{th}$ period can be approximated as follows:

$$\mathrm{fr(n)} \approx \mathrm{fr(0)}{\cdot}(1 + b{\cdot}n) \text{ --- (9)}$$

$$\mathrm{Tr(n)} \approx \mathrm{Tr(0)}{\cdot}(1 - b{\cdot}n) \text{ --- (10)}$$

and when the sleep time period is an N period of the RTC 64, the sleep time period is as follows:

$$\Sigma^{N-1}_{0}\, \mathrm{Tr(n)} = N{\cdot}\mathrm{Tr(0)}{\cdot}[1 - b{\cdot}(N{-}1)/2] \text{ --- (11)}$$

and can be estimated, for example, by b = [fr(N-1) - fr(0)]/N. By performing correction using approximation of Formula (11), when the change in the frequency of the RTC 64 is gentle, the accuracy of time by the RTC 64 can be improved, and the intermittent time can be increased to some extent. Here, approximation is made by a primary expression, but when it is possible to refer to the value of the counter 90 at three or more points in time by the RTC 64, approximation can be made by a second-order expression.

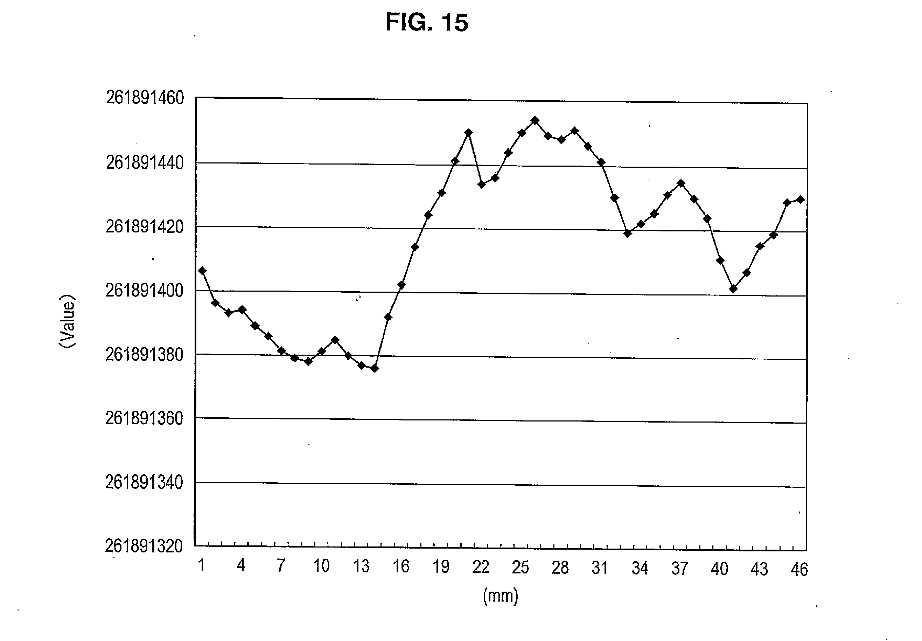

However, the change in the frequency of the RTC 64 is not simple and may steeply change according to, for example, a temperature or a power voltage as illustrated in Fig. 15, and thus there are many cases in which it is difficult to model the temporal change and predict the frequency of the RTC 64. In this case, when an improvement is not made even using the correction and the amount of change is large, it may be difficult to maintain synchronization of the satellite signal. In this case, it is necessary to operate the synchronization acquiring unit 40 and acquire synchronization again, but in order to suppress power consumption, it is desirable to reduce an operation of the synchronization acquiring unit 40 as much as possible.

In this case, when the change in the frequency of the RTC 64 is predicted to be small, only the RTC 64 is caused to operate during the sleep time, and when the change is predicted to be large, switching to a method of operating the counter 90 during the sleep time without referring to the RTC 64 is performed. If the change in the frequency of the RTC 64 is predicted as described above, when only the RTC 64 is operated, the synchronization acquiring unit 40 hardly uses the RTC 64 unless the change in the frequency of the RTC 64 is larger than predicted. When the change of the RTC 64 is predicted to be large, by referring to the value of the counter 90 at three or more points in time by the RTC 64, for example, the change in the converted value of the counter 90 by the clock of the RTC 64 can be used, and when the amount of change is a predetermined value or more, the change rate in the frequency of the RTC 64 is large, it is determined that is difficult to apply Formula (11), and thus switching of operating the counter 90 in the sleep state can be performed.

<2. Explanation of Device Having GPS Module>

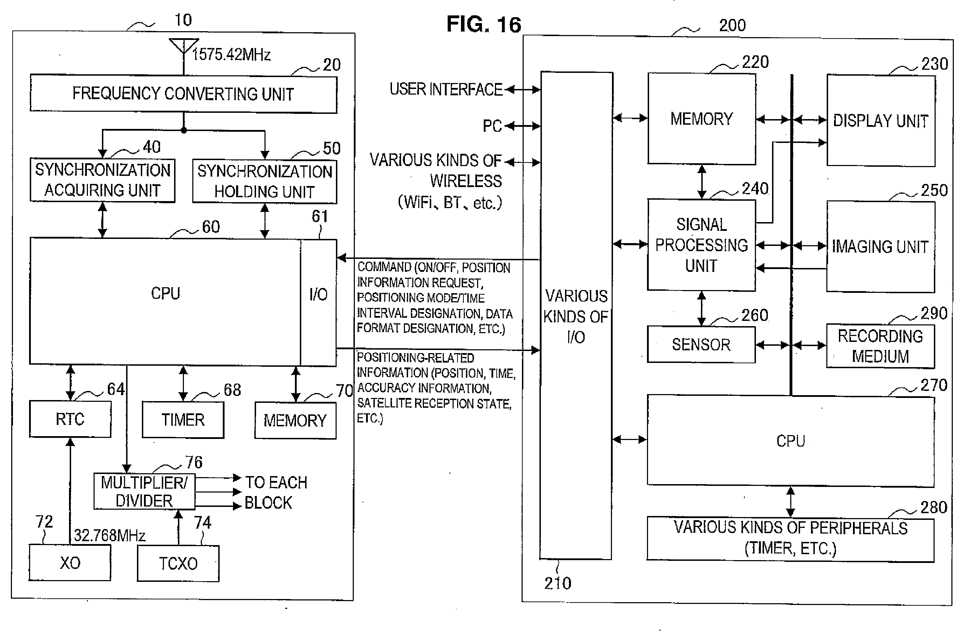

Next, a configuration of a device having a GPS module therein will be described in connection with an example in which the GPS module 10 is built in a digital still camera. Fig. 16 is an explanatory diagram illustrating a configuration of a digital still camera 200 that exchanges information with the GPS module 10 according to an embodiment of the present disclosure.

As illustrated in Fig. 16, the digital still camera 200 that exchanges information with the GPS module 10 is configured to include an I/O 210, a memory 220, a display unit 230, a signal processing unit 240, an imaging unit 250, a sensor 260, a CPU 270, various kinds of peripherals 280 such as a timer, and a recording medium 290.

The I/O 210 is an interface for receiving operation content input by a user and information from the external GPS module 10 and receiving/transmitting other signals. The I/O 210 outputs a command to the GPS module 10 and receives information from the GPS module 10. In addition, the I/O 210 receives an input from the user of the digital still camera 200, data from a personal computer (PC), or a radio signal from various kinds of wireless communication devices.

The signal processing unit 240 executes predetermined signal processing on an imaging signal output from the imaging unit 250, and outputs the image signal (image data) that has been subjected to the signal processing to the CPU 270 as base band digital video data. In other words, the signal processing unit 240 removes noise while sampling only a signal having image information through a correlated double sampling (CDS) circuit on the imaging signal output from the imaging unit 250. Then, a gain is adjusted through an auto gain control (AGC) circuit, and conversion into a digital signal is performed through an analog/digital (AD) converting circuit. Further, by executing signal processing of a detecting system on the converted digital signal, components of respective colors of R (red), G (green), and B (blue) are extracted, and processing such as y correction and a white balance correction is performed. Then, the resultant data is finally output to the CPU 270 as one base band digital video data.

Further, the signal processing unit 240 generates a video signal used to cause an imaging image (a so-called through image) to be displayed on the display unit 230 based on the imaging signal output from the imaging unit 250. For example, a display element such as a liquid crystal display (LCD) may be used as the display unit 230.

The imaging unit 250 includes an optical system and an imaging element. The optical system includes a plurality of lenses (for example, a zoom lens and a focus lens (not shown)) for condensing light from a subject, and incident light from the subject is supplied to the imaging element through the lenses or an iris (not shown). The imaging element performs photoelectric conversion from light from the subjected incident through the optical system into an analog imaging signal (image signal), and outputs the analog imaging signal that has been subjected to the photoelectric conversion to the signal processing unit 240. For example, a charge coupled device (CCD) sensor or a complementary metal oxide semiconductor (CMOS) sensor may be used as the imaging element.

The CPU 270 controls operations of the respective components of the digital still camera 200. Further, various kinds of the peripherals 280 such as a timer are used for various kinds of operations in the digital still camera 200. Further, the memory 220 includes a ROM, a RAM, or the like, and stores various kinds of information or programs necessary for an operation of the digital still camera 200.

The recording medium 290 is a recording medium that stores information such as a video file based on recording control by the CPU 270. For example, the recording medium 290 stores digital video data output from the signal processing unit 240. Further, the recording medium 290 stores a video management file used to manage a video file. The recording medium 290 may be built in the digital still camera 200 or may be configured to be removable from the digital still camera 200. Further, various devices such as a semiconductor memory, an optical recording medium, a magnetic disk, and a hard disk drive (HDD) may be used as the recording medium 290. For example, a recordable digital versatile disc (DVD), a recordable compact disc (CD), or a Blu-ray disc (a registered trademark) may be used as the optical recording medium.

An on/off command of the GPS module 10, a position information request, a positioning mode/time interval designation command, a data format designation command, and other commands are transmitted from the digital still camera 200 to the GPS module 10. On the other hand, positioning-related information such as a position, a time, accuracy information, and a satellite reception state are transmitted from the GPS module 10 to the digital still camera 200.

The configuration of the digital still camera 200 that exchanges information with the GPS module 10 according to an embodiment of the present disclosure has been described above with reference to Fig. 16. Next, operations of the GPS module 10 and the digital still camera 200 will be described.

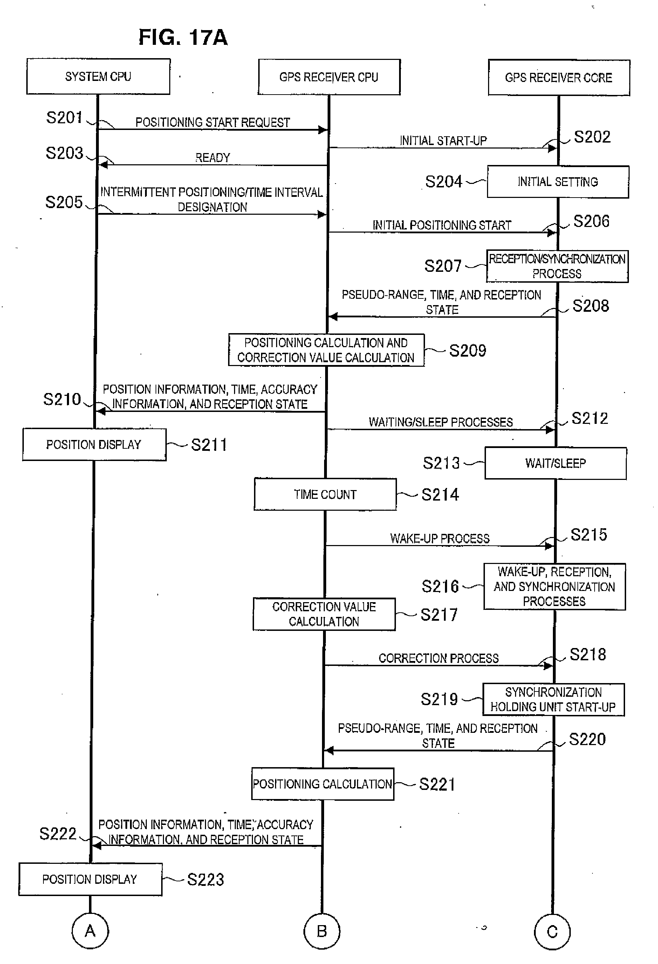

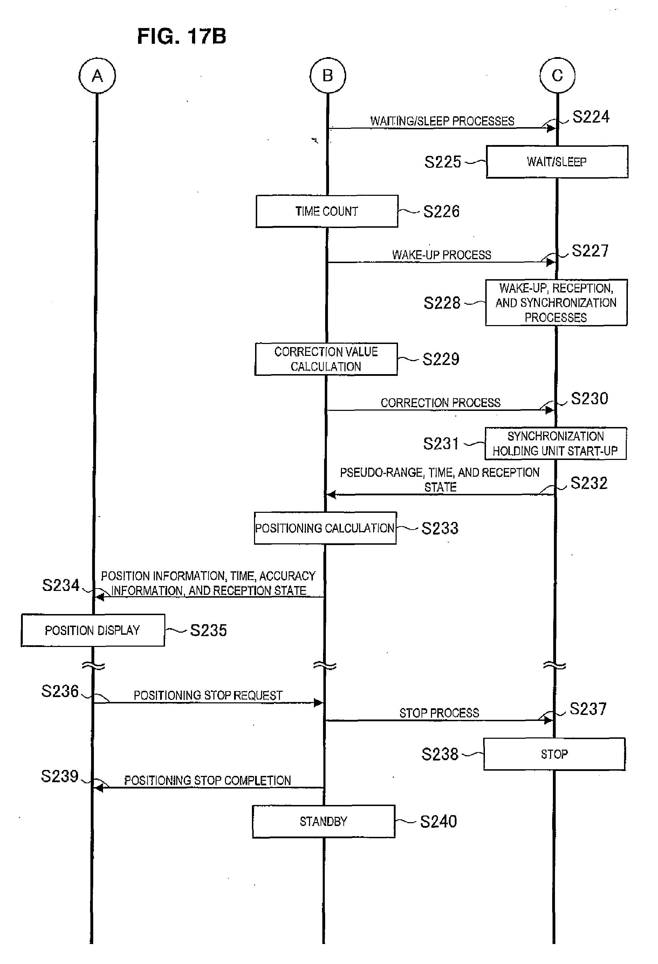

Figs. 17A and 17B are flowcharts illustrating operations of the GPS module 10 and the digital still camera 200. Figs. 17A and 17B illustrate operations of the CPU 270 of the digital still camera 200, the CPU 60 of the GPS module 10, and the core portions of the GPS module 10 (the frequency converting unit 20, the synchronization acquiring unit 40, and the synchronization holding unit 50). The operations of the GPS module 10 and the digital still camera 200 will be described below with reference to Figs. 17A and 17B.

The CPU 270 (system CPU) of Fig. 16 transmits a positioning start request to the GPS module 10 (step S201). The CPU 60 (the GPS receiver CPU) of the GPS module 10 that has received the positioning start request from the CPU 270 instructs the core portions (the frequency converting unit 20, the synchronization acquiring unit 40, the synchronization holding unit 50) of the GPS module 10 to perform an initial start (step S202). The CPU 60 that has instructed the core portions of the GPS module 10 to perform the initial start notifies the CPU 270 of the fact that preparation has been completed (step S203). Further, the core portions of the GPS module 10 that have been instructed to perform the initial start by the CPU 60 start various kinds of initial settings (step S204).

Thereafter, the CPU 270 (system CPU) of the digital still camera 200 instructs the GPS module 10 to perform intermittent positioning and designates a time interval of the intermittent positioning (step S205). The CPU 60 of the GPS module 10 that has received the positioning start request from the CPU 270 instructs the core portions of the GPS module 10 to start initial positioning (step S206). The core portions of the GPS module 10 that have received the initial positioning start instruction receive a radio wave from the GPS satellite, and execute the synchronization process (step S207).

When the core portions of the GPS module 10 execute the radio wave receiving process and the synchronization process, the CPU 60 is notified of information such as a pseudo-range, a time, and a radio wave reception state (step S208). The CPU 60 executes the positioning calculation using the information notified of by the core portions of the GPS module 10 and calculates the correction value for the correction process (step S209). The CPU 60 that has executed the positioning calculation notifies the CPU 270 of the digital still camera 200 of information such as position information, a time, accuracy information, and a reception state (step S210), and the CPU 270 causes the position of the current value to be displayed on the display unit 230 using the information notified of by the CPU 60 (step S211).

Next, the CPU 60 instructs the core portions of the GPS module 10 to perform the waiting process and the sleep process (step S212). The core portions of the GPS module 10 that have received the instruction from the CPU 60 execute the waiting process and the sleep process (step S213). As a result, the core portions of the GPS module 10 enter a state in which only the counter 90 is operating.

The CPU 60 counts a time based on the time interval notified of by the CPU 270 of the digital still camera 200 in step S205 (step S214). Then, when a predetermined time comes, the CPU 60 instructs the core portions of the GPS module 10 to perform the wake-up process (step S215). The core portions of the GPS module 10 that have received the instruction from the CPU 60 execute the wake-up process, receive the radio wave from the GPS satellite, and execute the synchronization process (step S216).

Next, the CPU 60 calculates the correction value for the correction process (step S217), and the CPU 60 instructs the core portions of the GPS module 10 to start up through the correction process using the correction value calculated in step S217 (step S218). The correction process is a process of setting a time to start the synchronization holding unit 50 after the recovery from the sleep state for each satellite, and is specifically the correction calculation using Formula (7). When the start-up instruction is received from the CPU 60, the synchronization holding unit 50 starts the start-up process (step S219).

When the radio wave receiving process and the synchronization process are executed, the core portions of the GPS module 10 notify the CPU 60 of information such as a pseudo-range, a time, and a radio wave reception state (step S220). The CPU 60 executes the positioning calculation using the information notified of by the core portions of the GPS module 10 (step S221). The CPU 60 that has executed the positioning calculation notifies the CPU 270 of the digital still camera 200 of information such as position information, a time, accuracy information, and a reception state (step S222), and the CPU 270 causes the position of the current value to be displayed on the display unit 230 using the information notified of by the CPU 60 (step S223).

Next, the CPU 60 instructs the core portions of the GPS module 10 to perform the waiting process and the sleep process (step S224). The core portions of the GPS module 10 that have received the instruction from the CPU 60 execute the waiting process and the sleep process (step S225). As a result, the core portions of the GPS module 10 enter a state in which only the counter 90 is operating in the synchronization holding unit 50.

Thereafter, the CPU 60 and the core portions of the GPS module 10 execute counting of a predetermined time, the wake-up process, the signal receiving process and synchronization process, the correction value calculating process, the synchronization holding unit start-up process, and the positioning calculation process similarly to steps S214 to S220 (steps S226 to S233). Then, the CPU 60 that has executed the positioning calculation notifies the CPU 270 of the digital still camera 200 of information such as position information, a time, accuracy information, and a reception state (step S234), and the CPU 270 causes the position of the current value to be displayed on the display unit 230 using the information notified of by the CPU 60 (step S235).

The above-described intermittent operation is repeatedly executed, and thus the GPS module 10 can lower the average power and peak power.

Thereafter, when the CPU 270 of the digital still camera 200 notifies the CPU 60 of the GPS module 10 of the positioning stop request by the user's operation or the like (step S236), the CPU 60 that has been notified instructs the core portions of the GPS module 10 to perform the positioning stop process (step S237). Then, the core portions of the GPS module 10 stop their operations in response to the positioning stop instruction from the CPU 60 (step S238). The CPU 60 notifies the CPU 270 of the digital still camera 200 of the fact that the positioning stop process of the GPS module 10 has been completed (step S240) and enters the standby state (step S239).

As the GPS module 10 and the digital still camera 200 operate as described above, the GPS module 10 intermittently executes the positioning process. Then, the GPS module 10 enters a state in which only the counter 90 is operating in the synchronization holding unit 50 in the sleep state. As a result, the GPS module 10 can lower the average power and the peak power.

The operations of the GPS module 10 and the digital still camera 200 have been described above with reference to Figs. 17A and 17B. Here, the example in which the GPS module 10 is built in the digital still camera 200 has been described, but the present disclosure is not limited to this example. The GPS module 10 may be disposed outside the digital still camera 200, that is, the GPS module 10 may be connected to the digital still camera 200, and a command and information may be exchanged between the digital still camera 200 and the GPS module 10.

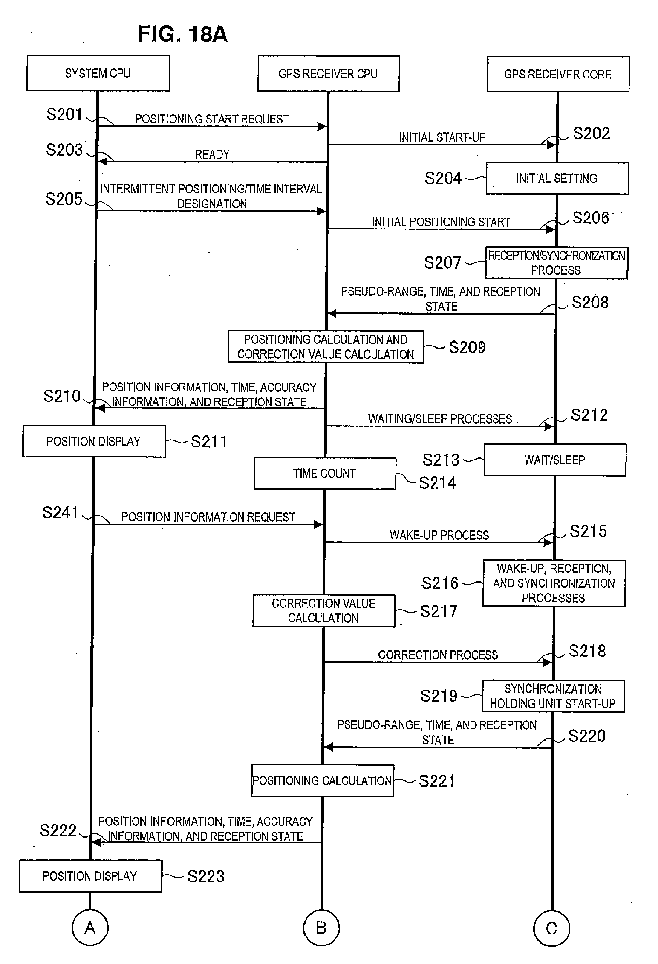

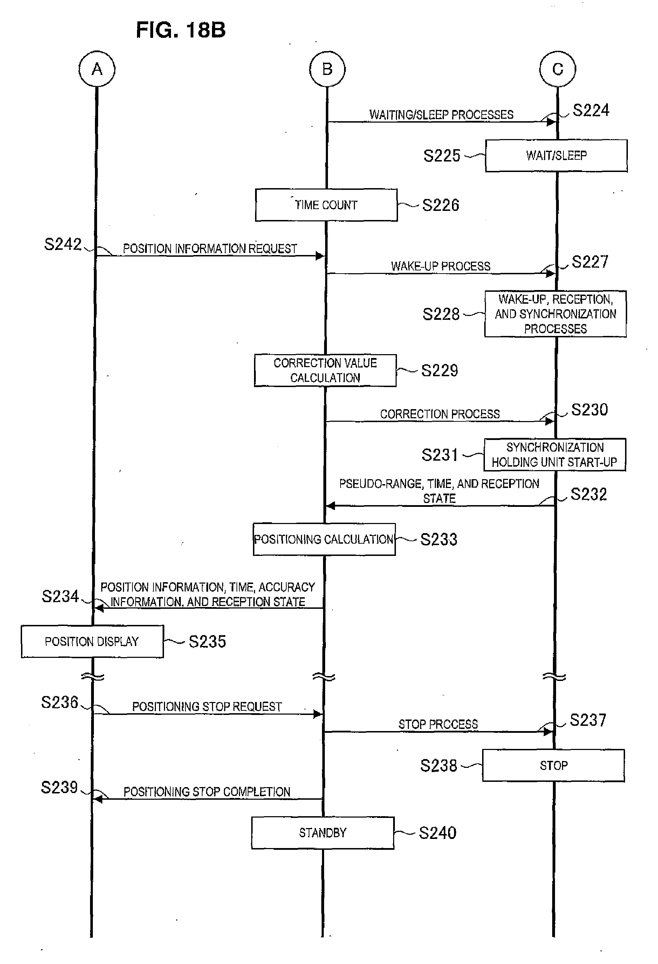

Further, in Figs. 17A and 17B, when a predetermined time comes, the CPU 60 instructs the core portions of the GPS module 10 to perform the wake-up process (steps S215 and S227), but when the position information request notice is received from the CPU 270 of the digital still camera 200, the CPU 60 may instruct the core portions of the GPS module 10 to perform the wake-up process. Figs. 18A and 18B are flowcharts illustrating another example of operations of the GPS module 10 and the digital still camera 200. Figs. 18A and 18B illustrate operations in which, when the CPU 270 of the digital still camera 200 notifies the CPU 60 of the position information request (steps S241 and S242), the CPU 60 instructs the core portions of the GPS module 10 to perform the wake-up process.

<3. Conclusion>

The embodiment of the present disclosure has been described above using the GPS module 10 as an example. As described above, during the sleep time period, in the synchronization holding unit 50, the diffusion code generator including the NCO 152 and the PNG 154 and the counter 90 are operated, and the remaining components are stopped, and thus synchronization of the satellite signal can be held in a pseudo manner during the sleep time period. As synchronization of the satellite signal can be held in a pseudo manner during the sleep time period, the GPS module 10 can recover synchronization in a very short time after the recovery from the sleep state, and can perform positioning in a short time without operating the synchronization acquiring unit 40, and thus the intermittent operation method of reducing the average and peak power consumption can be implemented.

In addition, the present disclosure can be basically applied to the GNSS receiver as well as the GPS. In other words, the above-described embodiment of the present disclosure can be applied to a wireless system of a general spread spectrum type.

Further, in the above embodiment, the counter 90 although has been treated as being included in the synchronization holding unit 50, it is necessarily inside the synchronization holding unit 50 but may be disposed outside the synchronization holding unit 50.

The preferred embodiments of the present disclosure have been described above with reference to the accompanying drawings, whilst the present disclosure is not limited to the above examples, of course. A person skilled in the art may find various alternations and modifications within the scope of the appended claims, and it should be understood that they will naturally come under the technical scope of the present disclosure.

Reference Signs List

| 10 | GPS module |
| 12 | antenna |
| 20 | frequency converting unit |
| 40 | synchronization acquiring unit |
| 50 | synchronization holding unit |
| 60 | CPU |
| 64 | RTC |
| 68 | timer |
| 70 | memory |
| 72 | XO |
| 74 | TCXO |
| 76 | multiplier/divider |
| 90 | counter |
| 100 | channel circuit |
| 101 | Costas loop |
| 102 | DLL |
| 152 | NCO |
| 154 | PNG |
| 200 | digital still camera |
| 210 | I/O |
| 220 | memory |
| 230 | display unit |
| 240 | signal processing unit |
| 250 | imaging unit |
| 260 | sensor |
| 270 | CPU |
| 280 | various kinds of peripherals |
| 290 | recording medium |

**Claims**

1. A receiving device, comprising:

   a receiving unit that receives a signal from a satellite in a Global Positioning System (GPS);
   a frequency converting unit that converts a frequency of a reception signal received by the receiving unit into a predetermined intermediate frequency (IF);

a synchronization acquiring unit that performs synchronization acquisition for detecting a phase of a spread code in the IF signal converted by the frequency converting unit and detects a carrier frequency in the IF signal;

a synchronization holding unit that assigns and sets the phase of the spread code detected by the synchronization acquiring unit and the carrier frequency detected by the synchronization acquiring unit to a plurality of channels that are independently provided for each satellite in order to correspond to a plurality of the satellites, holds synchronization of the spread code and a carrier using the set phase of the spread code and the carrier frequency, and demodulates a message included in the IF signal; and

a control unit that executes operation control including a positioning calculation using the message demodulated by the synchronization holding unit,

wherein the synchronization holding unit includes a diffusion code generating unit that generates a diffusion code in synchronization with the spread code, and the synchronization holding unit refers to a counter that operates with a clock using a temperature-compensated oscillator that oscillates at a predetermined frequency as an oscillation source, and

during a sleep time period in which a positioning operation is not performed, only the counter operates and the synchronization holding unit stops generating a diffusion code, and when the sleep time period ends, the control unit performs a predictive calculation on a starting point of a diffusion code cycle from an elapsed time measured by the counter for each satellite, and the diffusion code generating unit assigned for each satellite is started according to the predicted starting point.

2. The receiving device according to claim 1, further comprising:

a real-time clock that consumes less power than the clock; and

a memory that holds a value even in the sleep time period,

wherein the control unit stores a value of the counter in the real-time clock before the sleep time period starts in the memory with reference to at least two or more points, operates the real-time clock instead of the counter when the sleep time period starts, converts an elapsed time of the real-time clock into an elapsed time of the counter using the value of the counter stored in the memory when the sleep time period ends, performs a predictive calculation on the starting point of the diffusion code cycle using information of the converted elapsed time for each satellite, and operates the diffusion code generating unit assigned to each satellite according to the predicted starting point.

3. The receiving device according to claim 2,

wherein the control unit stores one or more ratios of a value of the counter during given two points in time and an elapsed time of the real-time clock during the given two points in time in the memory, predicts a ratio of an elapsed time of the counter and an elapsed time of the real-time clock using information of the one or more ratios of the elapsed times stored in the memory when the sleep time period ends, and converts an elapsed time of the real-time clock into an elapsed time of the counter using the prediction result.

4. The receiving device according to claim 3,

wherein, when the ratio of the elapsed time of the real-time clock is equal to or less than a predetermined value, the real-time clock is operated instead of the counter during the sleep time period, and when the ratio of the elapsed time of the real-time clock is over the predetermined value, only the counter is operated during the sleep time period.

5. The receiving device according to claim 1,

wherein the control unit corrects a value of the numerically controlled oscillator at a point in time at which the sleep time period ends in consideration of an amount of change in a Doppler shift of a satellite in the sleep time period.

6. The receiving device according to claim 1,

wherein the diffusion code generating unit includes a numerically controlled oscillator and a spread code generator that receives an output signal of the numerically controlled oscillator and generates a spread code.

7. The receiving device according to claim 1,

wherein operations of the receiving unit, the frequency converting unit, the synchronization acquiring unit, and the control unit are stopped in the sleep time period.

8. A receiving method, comprising:

receiving a signal from a satellite in a Global Positioning System (GPS);

converting a frequency of the received reception signal into a predetermined intermediate frequency (IF);

performing synchronization acquisition for detecting a phase of a spread code in the converted IF signal, and detecting a carrier frequency in the IF signal;

generating a diffusion code in synchronization with the spread code, assigning and setting the phase of the spread code detected by the synchronization acquisition and the carrier frequency detected by the synchronization acquisition to a plurality of channels that are independently provided for each satellite in order to correspond to a plurality of the satellites using a synchronization holding unit that refers to a counter that operates with a clock using a temperature-compensated oscillator that oscillates at a predetermined frequency as an oscillation source, holding synchronization of the spread code and a carrier using the set phase of the spread code and the carrier frequency, and demodulating a message included in the IF signal;

executing operation control including a positioning calculation using the demodulated message; and

during a sleep time period in which a positioning operation is not performed, operating only the counter and stopping generating a diffusion code, and when the sleep time period ends, performing a predictive calculation on a starting point of a diffusion code cycle from an elapsed time measured by the counter for each satellite, and restarting generating a diffusion code for each satellite according to the predicted starting point.

9. A computer program for causing a computer to execute:

receiving a signal from a satellite in a Global Positioning System (GPS);

converting a frequency of the received reception signal into a predetermined intermediate frequency (IF);

performing synchronization acquisition for detecting a phase of a spread code in the converted IF signal, and detecting a carrier frequency in the IF signal;

generating a diffusion code in synchronization with the spread code, assigning and setting the phase of the spread code detected by the synchronization acquisition and the carrier frequency detected by the synchronization acquisition to a plurality of channels that are independently provided for each satellite in order to correspond to a plurality of the satellites using a synchronization holding unit that refers to a counter that operates with a clock using a temperature-compensated oscillator that oscillates at a predetermined frequency as an oscillation source, holding synchronization of the spread code and a carrier using the set phase of the spread code and the carrier frequency, and demodulating a message included in the IF signal;

executing operation control including a positioning calculation using the demodulated message; and

during a sleep time period in which a positioning operation is not performed, operating only the counter and stopping generating a diffusion code, and when the sleep time period ends, performing a predictive calculation on a starting point of a diffusion code cycle from an elapsed time measured by the counter for each satellite, and restarting generating a diffusion code for each satellite according to the predicted starting point.

10. A mobile terminal that exchanges a command and information with the receiving device according to claim 1.

## FIG. 1

EP 2 602 642 A1

## FIG. 2

# FIG. 3

**FIG. 4**

CORRELATION
LEVEL

1

0

P1

TIME

# FIG. 5

Preamble & TIME INFORMATION

CLOCK CORRECTION INFORMATION
SATELLITE INFORMATION

Ephemeris
(INDIVIDUAL SATELLITE)

Almanac
(COMMON IN ALL SATELLITES, 25 PAGES)

12.5 MINUTES
TOTAL

Subframe 1　Subframe 2　Subframe 3　Subframe 4　Subframe 5

300bits (6sec)

PageFrame 1500bits (30sec)

Data　Parity

Word 30bits (600msec)

Subframe 300bits (6sec)

EP 2 602 642 A1

# FIG. 6

EP 2 602 642 A1

## FIG. 7

IF SIGNAL ──────────────►

SYNCHRONIZATION ACQUIRING UNIT — 40

Coarse Doppler & Code Phase

50

Ch.1
CODE TRACKING
CARRIER TRACKING — 100

Ch.2
CODE TRACKING
CARRIER TRACKING — 100

Ch.N-1
CODE TRACKING
CARRIER TRACKING — 100

Ch.N
CODE TRACKING
CARRIER TRACKING — 100

TCXO74 ──────► COUNTER — 90

Fine Code Phase, Doppler & Message

CPU — 60

EP 2 602 642 A1

FIG. 8

# FIG. 9

RECEPTION SIGNAL

1chip

Early

Punctual

Late

0.5chip (example)

C/A CODE

CORRELATION VALUES OF E AND L ARE SAME

CORRELATION WAVEFORM (SYNCHRONIZED STATE)

## FIG. 10

IF RECEPTION SIGNAL

DIFFUSION CODE START

C/A    C/A    C/A   · · ·   C/A

DIFFUSION CODE ONE PERIOD (1,023 chip)

$\Delta p = -\Delta f / 1,540 \cdot T$

COUNTER

1ms   1ms   1ms   · · ·   1ms

T

t=0     −   +   t=T

# FIG. 11

SATELLITE 1
- SATELLITE SIGNAL: C/A | C/A | C/A · · · C/A | C/A · · ·
- DIFFUSION CODE: C/A · · ·
  DIFFUSION CODE GENERATOR START (SATELLITE 1)

SATELLITE 2
- SATELLITE SIGNAL: C/A | C/A | C/A · · · C/A | C/A · · ·
- DIFFUSION CODE: C/A · · ·
  DIFFUSION CODE GENERATOR START (SATELLITE 2)

SATELLITE N
- SATELLITE SIGNAL: C/A | C/A | C/A · · · C/A · · ·
- DIFFUSION CODE: C/A · · ·
  DIFFUSION CODE GENERATOR START (SATELLITE N)

T

ts    tw

ON      SLEEP      ON

EP 2 602 642 A1

## FIG. 12

# FIG. 13

```
          ( START )
              │
              ▼
    ┌──────────────────┐
    │ INITIAL START-UP │ ─── S101
    └──────────────────┘
              │
              ▼
    ┌────────────────────┐
    │ INITIAL POSITIONING│ ─── S102
    └────────────────────┘
              │
              ▼
    ┌──────────────────┐
    │ DECIDE ts AND tw │ ─── S103
    └──────────────────┘
              │
              ▼
    ┌──────────────────┐
    │  WAITING PROCESS │ ─── S104
    └──────────────────┘
              │
              ▼
    ┌──────────────────┐
    │   SLEEP PROCESS  │ ─── S105
    └──────────────────┘
              │
              ▼
    ┌──────────────────┐
    │  WAKE-UP PROCESS │ ─── S106
    └──────────────────┘
              │
              ▼
    ┌────────────────────┐
    │ CORRECTION PROCESS │ ─── S107
    └────────────────────┘
              │
              ▼
    ┌──────────────────┐
    │   POSITIONING    │ ─── S108
    └──────────────────┘
              │
              ▼
   YES      ◇◇◇◇◇◇◇
 ◄──────── ◇ CONTINUE? ◇ ─── S109
           ◇◇◇◇◇◇◇
              │ NO
              ▼
          (  END  )
```

**FIG. 14**

RTC COUNT VALUE

RTC ··· | M-1 | M | M+1 | ···

READING    READING

CPU CLOCK ···

READING    READING

COUNTER ···

··· | N-1 | N | N+1 | ···

COUNTER VALUE

EP 2 602 642 A1

FIG. 15

**FIG. 16**

## FIG. 17A

| SYSTEM CPU | GPS RECEIVER CPU | GPS RECEIVER CORE |
|---|---|---|

S201 — POSITIONING START REQUEST →

INITIAL START-UP → S202

S203 — ← READY

S204 — INITIAL SETTING

S205 — INTERMITTENT POSITIONING/TIME INTERVAL DESIGNATION →

INITIAL POSITIONING START → S206

S207 — RECEPTION/SYNCHRONIZATION PROCESS

← PSEUDO-RANGE, TIME, AND RECEPTION STATE — S208

POSITIONING CALCULATION AND CORRECTION VALUE CALCULATION — S209

S210 — ← POSITION INFORMATION, TIME, ACCURACY INFORMATION, AND RECEPTION STATE

WAITING/SLEEP PROCESSES → S212

POSITION DISPLAY — S211

S213 — WAIT/SLEEP

TIME COUNT — S214

WAKE-UP PROCESS → S215

S216 — WAKE-UP, RECEPTION, AND SYNCHRONIZATION PROCESSES

CORRECTION VALUE CALCULATION — S217

CORRECTION PROCESS → S218

S219 — SYNCHRONIZATION HOLDING UNIT START-UP

← PSEUDO-RANGE, TIME, AND RECEPTION STATE — S220

POSITIONING CALCULATION — S221

S222 — ← POSITION INFORMATION, TIME, ACCURACY INFORMATION, AND RECEPTION STATE

POSITION DISPLAY — S223

(A)          (B)          (C)

## FIG. 17B

## FIG. 18A

| SYSTEM CPU | GPS RECEIVER CPU | GPS RECEIVER CORE |
|---|---|---|

S201 — POSITIONING START REQUEST →

INITIAL START-UP → S202

S203 — ← READY

S204 — INITIAL SETTING

S205 — INTERMITTENT POSITIONING/TIME INTERVAL DESIGNATION →

INITIAL POSITIONING START → S206

S207 — RECEPTION/SYNCHRONIZATION PROCESS

PSEUDO-RANGE, TIME, AND RECEPTION STATE ← S208

POSITIONING CALCULATION AND CORRECTION VALUE CALCULATION — S209

S210 — POSITION INFORMATION, TIME, ACCURACY INFORMATION, AND RECEPTION STATE ←

WAITING/SLEEP PROCESSES → S212

POSITION DISPLAY — S211

TIME COUNT — S214    S213 — WAIT/SLEEP

S241 — POSITION INFORMATION REQUEST →

WAKE-UP PROCESS → S215

S216 — WAKE-UP, RECEPTION, AND SYNCHRONIZATION PROCESSES

CORRECTION VALUE CALCULATION — S217

CORRECTION PROCESS → S218

S219 — SYNCHRONIZATION HOLDING UNIT START-UP

PSEUDO-RANGE, TIME, AND RECEPTION STATE ← S220

POSITIONING CALCULATION — S221

S222 — POSITION INFORMATION, TIME, ACCURACY INFORMATION, AND RECEPTION STATE ←

POSITION DISPLAY — S223

(A)    (B)    (C)

## FIG. 18B

| | A | B | C |
|---|---|---|---|
| S224 | | WAITING/SLEEP PROCESSES → | |
| S225 | | | WAIT/SLEEP |
| S226 | | TIME COUNT | |
| S242 | POSITION INFORMATION REQUEST → | | |
| S227 | | WAKE-UP PROCESS → | |
| S228 | | | WAKE-UP, RECEPTION, AND SYNCHRONIZATION PROCESSES |
| S229 | | CORRECTION VALUE CALCULATION | |
| S230 | | CORRECTION PROCESS → | |
| S231 | | | SYNCHRONIZATION HOLDING UNIT START-UP |
| S232 | | ← PSEUDO-RANGE, TIME, AND RECEPTION STATE | |
| S233 | | POSITIONING CALCULATION | |
| S234 | ← POSITION INFORMATION, TIME, ACCURACY INFORMATION, AND RECEPTION STATE | | |
| S235 | POSITION DISPLAY | | |
| S236 | POSITIONING STOP REQUEST → | | |
| S237 | | STOP PROCESS → | |
| S238 | | | STOP |
| S239 | ← POSITIONING STOP COMPLETION | | |
| S240 | | STANDBY | |

<table>
<tr><td colspan="2" align="center"><strong>INTERNATIONAL SEARCH REPORT</strong></td><td>International application No.<br><br>PCT/JP2011/067207</td></tr>
</table>

| A. CLASSIFICATION OF SUBJECT MATTER |
|---|
| *G01S19/34*(2010.01)i, *G01S19/30*(2010.01)i, *G01S19/37*(2010.01)i |
| According to International Patent Classification (IPC) or to both national classification and IPC |

| B. FIELDS SEARCHED |
|---|
| Minimum documentation searched (classification system followed by classification symbols)<br>G01S19/34, G01S19/30, G01S19/37 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 2010-054507 A (O2 Micro, Inc.),<br>11 March 2010 (11.03.2010),<br>abstract; claims 1, 4; paragraphs [0004],<br>[0023], [0032], [0058], [0067]; fig. 1<br>& JP 2010-101888 A    & US 2010/0052984 A1<br>& US 2010/0100320 A1    & EP 2159592 A2<br>& EP 2180331 A2    & CN 101661092 A | 1-3,5-10<br>4 |
| Y<br>A | JP 2003-258769 A (Sony Corp.),<br>12 September 2003 (12.09.2003),<br>abstract; paragraphs [0035] to [0038], [0293],<br>[0430]; fig. 1<br>& US 2003/0231704 A1    & EP 1340997 A2 | 1-3,5-10<br>4 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 August, 2011 (23.08.11) | Date of mailing of the international search report<br>06 September, 2011 (06.09.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/067207

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2003-248044 A (Seiko Epson Corp.),<br>05 September 2003 (05.09.2003),<br>abstract; paragraphs [0001], [0016], [0018],<br>[0019], [0052], [0061]; fig. 2<br>& JP 2008-197114 A & US 2003/0164795 A1<br>& EP 1336861 A2 & CN 1450359 A | 1-3,5-10<br>4 |
| Y<br>A | JP 2006-177680 A (Furuno Electric Co., Ltd.),<br>06 July 2006 (06.07.2006),<br>abstract; paragraphs [0004], [0005], [0007],<br>[0008], [0011]; fig. 1, 2<br>& US 2006/0149984 A1 & CN 1794008 A | 1-3,5-10<br>4 |
| Y | JP 6-289117 A (Fujitsu Ten Ltd.),<br>18 October 1994 (18.10.1994),<br>paragraphs [0001], [0016]<br>(Family: none) | 5 |
| A | JP 10-170626 A (Matsushita Electric Industrial<br>Co., Ltd.),<br>26 June 1998 (26.06.1998),<br>paragraphs [0001], [0012], [0026]; fig. 1<br>(Family: none) | 1-10 |
| A | JP 2001-042023 A (Japan Radio Co., Ltd.),<br>16 February 2001 (16.02.2001),<br>abstract; claims 1 to 3, 5 to 8; paragraphs<br>[0027] to [0031]; fig. 1, 4<br>(Family: none) | 1-10 |

Form PCT/ISA/210 (continuation of second sheet) (July 2009)

## REFERENCES CITED IN THE DESCRIPTION

**Patent documents cited in the description**

- JP 4164662 B